# EUROPEAN PATENT APPLICATION

(11) **EP 4 838 485 A2**
(43) Date of publication of application: **11.11.2026**
(21) Application number: 26206844.8
(22) Date of filing: 12.09.2025
(51) Int. Cl.: G06V 20/00

(54) **DYNAMIC VIRTUAL SAFETY BUBBLES FOR AUTONOMOUS MOWING VEHICLE**

(30) Priority: 12.11.2024 US 202463719478 P
(62) Document number(s) of the earlier application(s) in accordance with Art. 76 EPC: 25202004.5 / 4 741 973
(71) Applicant: Deere & Company, Moline, IL 61265 (US)
(72) Inventor: ANDERSON, Kent Michael, Signal Mountain, Tennessee (US); POWERS, Bradley, Aurora, Colorado (US); LEWIS, Timothy J., Angier, North Carolina (US); DADGAR, Bijan, Raleigh, North Carolina (US); SANDOVAL, Joel, Apex, North Carolina (US)
(74) Representative: Reddie & Grose LLP

(57) **Abstract**

An autonomous mowing vehicle leverages a plurality of virtual safety bubbles and a virtual buffer around an object to avoid collisions between the object and the vehicle. The vehicle has a camera system comprising stereoscopic pairs of cameras positioned around the vehicle, a mowing deck comprising one or more motorized blades for mowing plants in the environment, and a control system. The control system is configured to: capture image data from a camera system of an autonomous mowing vehicle; detect at least one object in an environment surrounding the autonomous mowing vehicle based on the image data; generate a virtual buffer for the object, the virtual buffer positioned around the object; generate a plurality of virtual safety bubbles around the autonomous mowing vehicle based on a configuration of the autonomous mowing vehicle; and perform autonomous operation of the mowing vehicle to perform, via at least the mowing deck, one or more landscaping actions in the environment while evading breach of the plurality of virtual safety bubbles by the virtual buffer of the object."

## Description

### CROSS-REFERENCE TO RELATED APPLICATIONS

This application claims the benefit of and priority to U.S. Provisional Application No. 63/719,478 filed on November 12, 2024, which is incorporated by reference in its entirety.

### BACKGROUND

This disclosure relates to operating a mowing vehicle in a landscaping environment, for performing one or more landscaping actions to maintain the landscaping environment.

A mowing vehicle typically includes one or more blades situated below a mowing deck for mowing plants in a landscaping environment. The mowing vehicle typically includes a seat or a cab, where an operator can be seated when operating the mowing vehicle. A technical challenge arises when attempting to autonomously operate a mowing vehicle, as the vehicle's blades can pose a significant hazard to bystanders. Accordingly, there is a need for preventive measures to minimize the collision of the vehicle with various types of objects, whether persons or otherwise.

### SUMMARY

A mowing vehicle traverses a landscaping environment and performs one or more actions in the landscaping environment. The actions may include movement of the mowing vehicle, landscaping actions to maintain the landscaping environment, or other actions to affect plants or soil in the landscaping environment. The mowing vehicle may be configured to switch between an autonomous operation, a manual operation, or some combination thereof. Autonomous operation may refer to performing one or more actions without human intervention. Manual operation may refer to performing one or more actions with human intervention. Hybrid operation may refer to one or more actions being performed autonomously and one or more actions being performed manually.

According to a first aspect of the disclosure, there is provided an autonomous mowing vehicle comprising: a camera system comprising a plurality of cameras positioned around the autonomous mowing vehicle; a mowing deck comprising one or more motorized blades for mowing plants in an environment; and a control system configured to: capture image data from a camera system of an autonomous mowing vehicle; detect an object in an environment surrounding the autonomous mowing vehicle based on the image data; generate a virtual buffer for the object, the virtual buffer positioned around the object; generate a plurality of virtual safety bubbles around the autonomous mowing vehicle based on a configuration of the autonomous mowing vehicle; and perform, via at least the mowing deck, autonomous operation of the mowing vehicle to perform one or more landscaping actions in the environment while evading breach of the plurality of virtual safety bubbles by the virtual buffer of the object.

Preferably, the control system is further configured to: generate a spatial representation of the autonomous mowing vehicle based on the image data, wherein the spatial representation spatially describes the object in relation to the autonomous mowing vehicle.

Preferably, the control system is further configured to: apply one or more machine-learning models to classify an object type of a plurality of object types for the object based on the image data, wherein the virtual buffer for the object is based on the object type classified by the one or more machine-learning models.

Preferably, the plurality of object types includes persons and inanimate objects, wherein responsive to classifying the object as a person, generating the virtual buffer for the object having a first size, and wherein responsive to classifying the object as an inanimate object, generating the virtual buffer for the object having a second size smaller than the first size.

Preferably, the control system is configured to generate the plurality of virtual safety bubbles based on the configuration of the autonomous mowing vehicle comprises being configured to: generate an outer virtual safety bubble; and responsive to breach of the outer virtual safety bubble, trigger one or more warnings to distance the object from the autonomous mowing vehicle.

Preferably, the control system is configured to trigger one or more warnings comprises being configured to: the outer virtual safety bubble is configured to trigger, as the one or more warnings, an audio cue by a speaker or a visual cue by a light system.

Preferably, the control system is configured to generate the plurality of virtual safety bubbles based on the configuration of the autonomous mowing vehicle comprises being further configured to: responsive to breach of the outer virtual safety bubble, initiate a timer; and responsive to expiration of the timer, terminate autonomous operation of the autonomous mowing vehicle.

Preferably, the control system is configured to generate the plurality of virtual safety bubbles based on the configuration of the autonomous mowing vehicle comprises being configured to: generate an inner virtual safety bubble during actuation of the mowing deck of the autonomous mowing vehicle; and responsive to breach of the inner virtual safety bubble, terminate actuation of the mowing deck.

Preferably, the control system being configured to perform autonomous operation of the mowing vehicle comprises being configured to: detect a potential breach by the virtual buffer of the plurality of virtual safety bubbles based on a trajectory of the autonomous mowing vehicle; responsive to detecting the potential breach, modify the configuration of the autonomous mowing vehicle to evade the breach of the plurality of virtual safety bubbles; and modify the plurality of virtual safety bubbles around the autonomous mowing vehicle based on the modified configuration of the autonomous mowing vehicle.

According to a second aspect, there is provided a non-transitory computer-readable storage medium storing instructions that, when executed by a computer processor, cause the computer processor to perform operations comprising: capturing image data from a camera system of an autonomous mowing vehicle; detecting at least one object in an environment surrounding the autonomous mowing vehicle based on the image data; generating a virtual buffer for the object, the virtual buffer positioned around the object; generating a plurality of virtual safety bubbles around the autonomous mowing vehicle based on a configuration of the autonomous mowing vehicle; and performing autonomous operation of the mowing vehicle to perform one or more landscaping actions in the environment while evading breach of the plurality of virtual safety bubbles by the virtual buffer of the object.

Preferably, capturing the image data comprises capturing images from stereoscopic pairs of cameras positioned around the autonomous mowing vehicle to capture a 360-degree panoramic view of the environment surrounding the autonomous mowing vehicle.

Preferably, the operations further comprise: generating a spatial representation of the autonomous mowing vehicle based on the image data, wherein the spatial representation spatially describes the object in relation to the autonomous mowing vehicle.

Preferably, the operations further comprise: applying one or more machine-learning models to classify an object type of a plurality of object types for the object based on the image data, wherein the virtual buffer for the object is based on the object type classified by the one or more machine-learning models.

Preferably, the plurality of object types includes persons and inanimate objects, wherein responsive to classifying the object as a person, generating the virtual buffer for the object having a first size, and wherein responsive to classifying the object as an inanimate object, generating the virtual buffer for the object having a second size smaller than the first size.

Preferably, generating the plurality of virtual safety bubbles based on the configuration of the autonomous mowing vehicle comprises: generating an outer virtual safety bubble, wherein breach of the outer virtual safety bubble triggers one or more warnings to distance from the autonomous mowing vehicle.

Preferably, the outer virtual safety bubble is configured to trigger, as the one or more warnings, an audio cue by a speaker or a visual cue by a light system.

Preferably, the outer virtual safety bubble is configured to, responsive to the expiration of a timer, terminate autonomous operation of the autonomous mowing vehicle.

Preferably, generating the plurality of virtual safety bubbles based on the configuration of the autonomous mowing vehicle comprises: generating an inner virtual safety bubble during actuation of a landscaping mechanism of the autonomous mowing vehicle, wherein breach of the inner virtual safety bubble triggers termination of actuation of the landscaping mechanism.

Preferably, performing autonomous operation of the mowing vehicle comprises: detecting a potential breach by the virtual buffer of the plurality of virtual safety bubbles based on a trajectory of the autonomous mowing vehicle; responsive to detecting the potential breach, modifying the configuration of the autonomous mowing vehicle to evade the breach of the plurality of virtual safety bubbles; and modifying the plurality of virtual safety bubbles around the autonomous mowing vehicle based on the modified configuration of the autonomous mowing vehicle.

According to a third aspect, there is provided a computer-implemented method comprising: capturing image data from a camera system of an autonomous mowing vehicle; detecting at least one object in an environment surrounding the autonomous mowing vehicle based on the image data; generating a virtual buffer for the object, the virtual buffer positioned around the object; generating a plurality of virtual safety bubbles around the autonomous mowing vehicle based on a configuration of the autonomous mowing vehicle; and performing autonomous operation of the mowing vehicle to perform one or more landscaping actions in the environment while evading breach of the plurality of virtual safety bubbles by the virtual buffer of the object.

Preferably, capturing the image data comprises capturing images from stereoscopic pairs of cameras positioned around the autonomous mowing vehicle to capture a 360-degree panoramic view of the environment surrounding the autonomous mowing vehicle.

Preferably, the computer-implemented method further comprises: generating a spatial representation of the autonomous mowing vehicle based on the image data, wherein the spatial representation spatially describes the object in relation to the autonomous mowing vehicle.

Preferably, the computer-implemented method further comprises: applying one or more machine-learning models to classify an object type of a plurality of object types for the object based on the image data, wherein the virtual buffer for the object is based on the object type classified by the one or more machine-learning models.

Preferably, the plurality of object types includes persons and inanimate objects, wherein responsive to classifying the object as a person, generating the virtual buffer for the object having a first size, and wherein responsive to classifying the object as an inanimate object, generating the virtual buffer for the object having a second size smaller than the first size.

Preferably, generating the plurality of virtual safety bubbles based on the configuration of the autonomous mowing vehicle comprises: generating an outer virtual safety bubble, wherein breach of the outer virtual safety bubble triggers one or more warnings to distance from the autonomous mowing vehicle.

Preferably, the outer virtual safety bubble is configured to trigger, as the one or more warnings, an audio cue by a speaker or a visual cue by a light system.

Preferably, the outer virtual safety bubble is configured to, responsive to the expiration of a timer, terminate autonomous operation of the autonomous mowing vehicle.

Preferably, generating the plurality of virtual safety bubbles based on the configuration of the autonomous mowing vehicle comprises: generating an inner virtual safety bubble during actuation of a landscaping mechanism of the autonomous mowing vehicle, wherein breach of the inner virtual safety bubble triggers termination of actuation of the landscaping mechanism.

Preferably, performing autonomous operation of the mowing vehicle comprises: detecting a potential breach by the virtual buffer of the plurality of virtual safety bubbles based on a trajectory of the autonomous mowing vehicle; responsive to detecting the potential breach, modifying the configuration of the autonomous mowing vehicle to evade the breach of the plurality of virtual safety bubbles; and modifying the plurality of virtual safety bubbles around the autonomous mowing vehicle based on the modified configuration of the autonomous mowing vehicle.

### BRIEF DESCRIPTION OF DRAWINGS

FIG. 1A illustrates a front perspective view of a mowing vehicle, in accordance with one or more embodiments.
FIG. 1B illustrates a back perspective view of the mowing vehicle, in accordance with one or more embodiments.
FIG. 1C illustrates a plan view of the mowing vehicle, in accordance with one or more embodiments.
FIG. 2 illustrates a block diagram of the system environment for the mowing vehicle, in accordance with one or more embodiments.
FIG. 3 illustrates a mowing vehicle with one or more inherent blind spots based on the positioning of a plurality of detection mechanisms, in accordance with one or more embodiments.
FIG. 4A illustrates a first virtual safety bubble around a mowing vehicle, in accordance with one or more embodiments.
FIG. 4B illustrates two virtual safety bubbles around a mowing vehicle, in accordance with one or more embodiments.
FIG. 4C illustrates three virtual safety bubbles around a mowing vehicle, in accordance with one or more embodiments.
FIG. 4D illustrates dynamically modifying a virtual safety bubble around a mowing vehicle based on the mowing vehicle's planned path, in accordance with one or more embodiments.
FIG. 5 illustrates a flowchart of the method for leveraging virtual safety bubble(s) during operation of the mowing vehicle, in accordance with one or more embodiments.
FIG. 6 illustrates a verification process of the detection systems of the mowing vehicle, in accordance with one or more embodiments.
FIG. 7 illustrates a notification that the mowing vehicle is establishing the virtual safety bubble, in accordance with one or more embodiments.
FIG. 8 illustrates a notification transmitted to a client device regarding a detected obstacle, in accordance with one or more embodiments.
FIG. 9 illustrates actions the mowing vehicle may implement when detecting an object in the virtual safety bubble, in accordance with one or more embodiments.
FIG. 10 illustrates actions the mowing vehicle may implement when detecting an object in the virtual safety bubble, in accordance with one or more embodiments.
FIG. 11 illustrates a navigational workflow of mowing vehicle, in accordance with one or more embodiments.
FIG. 12 illustrates navigation of a mowing vehicle on-path on a straight path, in accordance with one or more embodiments.
FIG. 13 illustrates navigation of a mowing vehicle off-path on a straight path, in accordance with one or more embodiments.
FIG. 14 illustrates navigation of a mowing vehicle on-path and off-center of a straight path, in accordance with one or more embodiments.
FIG. 15A illustrates navigation of a mowing vehicle when off-path but perceived to be on-path, in accordance with one or more embodiments.
FIG. 15B illustrates navigation of a mowing vehicle when on-path but perceived to be off-path, in accordance with one or more embodiments.
FIG. 16 illustrates navigation of a mowing vehicle when on-turn on a curved path, in accordance with one or more embodiments.
FIG. 17 illustrates navigation of a mowing vehicle when off-turn on a curved path, in accordance with one or more embodiments.
FIG. 18 illustrates a process flowchart describing object aware collision avoidance by an autonomous mowing vehicle, according to one or more embodiments.
FIG. 19 illustrates one example decision tree of determining a size of the virtual buffer based on the object's characteristics, in accordance with one or more embodiments.
FIG. 20 illustrates a workflow for implementing virtual safety bubbles for a human detected in proximity to the mowing vehicle, in accordance with one or more embodiments.
FIG. 21 illustrates a workflow for implementing virtual safety bubble for resolution of a detected non-human obstacle in proximity to the mowing vehicle, in accordance with one or more embodiments.
FIG. 22 illustrates a workflow for human verification with a multiple concordance of human detection, in accordance with one or more embodiments.
FIG. 23 illustrates an example computing system, in accordance with one or more embodiments.

The figures depict various embodiments for purposes of illustration only. One skilled in the art will readily recognize from the following discussion that alternative embodiments of the structures and methods illustrated herein may be employed without departing from the principles described herein.

### DETAILED DESCRIPTION

### I. INTRODUCTION

A vehicle (e.g., a mowing vehicle) includes one or more sensors capturing information about the surroundings as the vehicle moves through an environment. The environment can include various objects (e.g., ground and obstructions) used to determine actions (e.g., a movement action for moving the vehicle, performing a landscaping action to maintain a state of a landscaping environment, modifying a parameter for a landscaping plan, modifying an operational parameter, and modifying a sensor parameter, etc.) for the vehicle to operate in the environment. A landscaping action is a physical action that changes some state of the landscaping in the environment. The landscaping action may affect plants, soil, mulch, wood chips, gravel, rocks, grading of the environment, debris, or any other landscaping features (e.g., water features, structures, etc.).

The vehicle includes a control system that processes the information obtained by the sensors to generate corresponding actions. For example, the control system processes information to identify objects to generate corresponding landscaping actions. There are many examples of a vehicle processing visual information obtained by an image sensor coupled to the vehicle to identify environmental conditions, to plan out landscaping actions, to identify and avoid obstructions, or some combination thereof.

To aid in the safe navigation of the mowing vehicle, the control system may generate and maintain a virtual safety bubble that triggers when an obstacle breaches the virtual safety bubble. When an object is determined to have breached, i.e., is within the virtual safety bubble, the control system may terminate or cease operations, and/or may enact other preventive measures. Preventive measures include rerouting the mowing vehicle around the obstacle, changing a configuration of the mowing vehicle, requesting input from an operator or a manager, etc.

The control system generates the virtual safety bubble based on a configuration of the mowing vehicle. As the mowing vehicle changes configuration, the control system can automatically and/or dynamically adjust the virtual safety bubble, by adjusting characteristics of the virtual safety bubble. For example, when the mowing vehicle accelerates to a higher velocity, the control system can automatically and/or dynamically adjust a size of the virtual safety bubble to be larger than before to provide additional distance to enact the preventive measures. In another example, the mowing vehicle may change its configuration to perform different landscaping actions, and the control system can automatically and/or dynamically adjust the parameters of the virtual safety bubble in response to the changed configuration.

### II. LANDSCAPING ENVIRONMENT MANAGEMENT AND LANDSCAPING PLANS

### Landscaping environment Management

Operators ("managers") are responsible for managing landscaping operations in one or more landscaping environments. Managers work to implement a landscaping objective within those landscaping environments and select from among a variety of landscaping actions to implement that landscaping objective. Traditionally, managers are, for example, a landscaper or a landscaping environment manager that works in landscaping but could also be other people and/or systems configured to manage landscaping operations within the landscaping environment. For example, a manager could be an automated mowing vehicle, a machine learned computer model, etc. In some cases, a manager may be a combination of the managers described above. For example, a manager may include an operator assisted by a machine-learned model and one or more automated mowing vehicles or could be an operator working in tandem with the mowing vehicles.

Managers implement one or more landscaping objectives for a landscaping environment. A landscaping objective is typically a macro-level goal for a landscaping environment. For example, macro-level landscaping objectives may include mowing grass or plants, applying fertilizer to grass or plants, raking debris on the landscaping environment, or any other suitable landscaping objective. However, landscaping objectives may also be a micro-level goal for the landscaping environment. For example, micro-level landscaping objectives may include performing a small-scale action in the landscaping environment, repairing or correcting a part of a mowing vehicle, requesting feedback from a manager, etc. Of course, there are many possible landscaping objectives and combinations of landscaping objectives, and the previously described examples are not intended to be limiting.

In one or more embodiments, landscaping objectives are accomplished by one or more mowing vehicles performing a series of landscaping actions. Mowing vehicles are described in greater detail below. Landscaping actions may be any operation implementable by a mowing vehicle within the landscaping environment that works towards a landscaping objective. Consider, for example, a landscaping objective of maintaining a golf course. This landscaping objective requires a litany of landscaping actions, e.g., mowing different portions of the course to a different height of the grass, fertilizing portions of the course, repairing portions of the course, etc. Similarly, each landscaping action pertaining to the overall objective may be a landscaping objective in and of itself. For instance, mowing a lawn can require its own set of landscaping actions, e.g., clearing debris, mowing the lawn, applying new seed, etc.

**In** other words, managers implement a landscaping plan in the landscaping environment to accomplish a landscaping objective. A landscaping plan is a hierarchical set of macro-level and/or micro-level objectives that accomplish the landscaping objective of the manager. Within a landscaping plan, each macro or micro-objective may require a set of landscaping actions to accomplish, or each macro or micro-objective may be a landscaping action itself. So, to expand, the landscaping plan is a temporally sequenced set of landscaping actions to apply to the landscaping environment that the manager expects will accomplish the landscaping objective.

When executing a landscaping plan in a landscaping environment, the landscaping plan itself and/or its constituent landscaping objectives and landscaping actions have various results. A result is a representation as to whether, or how well, a mowing vehicle accomplished the landscaping plan, landscaping objective, and/or landscaping action. A result may be a qualitative measure such as "accomplished" or "not accomplished," or may be a quantitative measure such as "1.5 acres mowed." Results can also be positive or negative, depending on the configuration of the mowing vehicle or the implementation of the landscaping plan. Moreover, results can be measured by sensors of the mowing vehicle, input by managers, or accessed from a datastore or a network.

Traditionally, managers have leveraged their experience, expertise, and technical knowledge when implementing landscaping actions in a landscaping plan. For example, a manager may rely on established best practices in determining a specific set of landscaping actions to perform in a landscaping plan to accomplish a landscaping objective. Other examples include leveraging their expertise in action order, or workflow.

Leveraging manager and historical knowledge to make decisions for a landscaping plan affects both spatial and temporal characteristics of a landscaping plan. For instance, landscaping actions in a landscaping plan have historically been applied to entire landscaping environment rather than small portions of a landscaping environment. For example, in the grand scheme of maintaining a landscaping environment, the manager may plan out the entire schedule of actions that must be performed to achieve the goal of maintaining a landscaping environment. Similarly, each landscaping action in the sequence of landscaping actions of a landscaping plan are historically performed at approximately the same time. For example, when a manager decides to fertilize a landscaping environment, she fertilizes the landscaping environment at approximately the same time; or, when the manager decides to mow the landscaping environment, she does so at approximately the same time.

Notably though, mowing vehicles have greatly advanced in their capabilities. For example, mowing vehicles continue to become more autonomous, include an increasing number of sensors and measurement devices, employ higher amounts of processing power and connectivity, and implement various machine vision algorithms to enable managers to successfully implement a landscaping plan.

Because of this increase in capability, managers are no longer limited to spatially and temporally monolithic implementations of landscaping actions in a landscaping plan. Instead, managers may leverage advanced capabilities of mowing vehicles to implement landscaping plans that are highly localized and determined by real-time measurements in the landscaping environment. **In** other words, rather than a manager applying a "best guess" landscaping plan to an entire landscaping environment, they can implement individualized and informed landscaping plans in the landscaping environment.

### III. MOWING VEHICLE

### Overview

A mowing vehicle that implements landscaping actions of a landscaping plan may have a variety of configurations, some of which are described in greater detail below.

The mowing vehicle generally includes a detection mechanism, a landscaping mechanism, and a control system. The mowing vehicle can additionally include a wireless transmitter, a display, manual controls, a power source, digital memory, communication apparatus, or any other suitable component that enables the mowing vehicle to implement landscaping actions in a landscaping plan. Moreover, the described components and functions of the mowing vehicle are just examples, and a mowing vehicle can have different or additional components and functions other than those described below.

### Operating Environment

The mowing vehicle operates in an operating environment. The operating environment is the environment surrounding the mowing vehicle while it implements landscaping actions of a landscaping plan. The operating environment may also include the mowing vehicle and its corresponding components itself.

The operating environment typically includes a landscaping environment, and the mowing vehicle generally implements landscaping actions of the landscaping plan in the landscaping environment. A landscaping environment is a geographic area where the mowing vehicle implements a landscaping plan. The landscaping environment may be an outdoor landscaping environment but could also be an indoor location, or any other suitable environment. The landscaping environment can include a lawn, other plant-based landscape features, rocks, gravel, mulch, wood chips, water features, etc.

A landscaping environment may include any number of landscaping environment portions. A landscaping environment portion is a subunit of a landscaping environment. For example, a landscaping environment portion may be a portion of the landscaping environment designated for a landscape structure. Or, in another example, a landscaping environment portion may be tracks for movement of vehicles. The mowing vehicle 100 can execute different landscaping actions for different landscaping environment portions. For example, the mowing vehicle 100 may mow the lawn in one landscaping portion, while removing debris in another landscaping portion. Moreover, a landscaping environment and a portion of the landscaping environment are largely interchangeable in the context of the methods and systems described herein. That is, landscaping plans and their corresponding landscaping actions may be applied to an entire landscaping environment or a landscaping environment portion depending on the circumstances at play.

### III.A EXAMPLE CONFIGURATIONS

### Detection mechanism(s)

The mowing vehicle may include a detection mechanism. The detection mechanism identifies objects in the operating environment of the mowing vehicle. To do so, the detection mechanism obtains information describing the environment (e.g., sensor or image data), and processes that information to identify pertinent objects (e.g., obstacles, persons, other vehicles, etc.) in the operating environment. Identifying objects in the environment further enables the mowing vehicle to implement landscaping actions in the landscaping environment. For example, the detection mechanism may capture an image of the landscaping environment and process the image to identify any human operators in the vicinity of the vehicle. The mowing vehicle then implements landscaping actions in the landscaping environment based on the identified objects, e.g., avoiding collision with obstacles in the environment.

The mowing vehicle can include any number or type of detection mechanism that may aid in determining and implementing landscaping actions. In some embodiments, the detection mechanism includes one or more sensors. For example, the detection mechanism can include a multispectral camera, a stereo camera, a CCD camera, a single lens camera, a CMOS camera, hyperspectral imaging system, LIDAR system (light detection and ranging system), a depth sensing system, dynamometer, IR camera, thermal camera, humidity sensor, light sensor, temperature sensor, an inertial measurement unit (IMU) sensor, an accelerometer, a sensor coupled to one or more motor assemblies controlling movement of the vehicle of components thereof, or any other suitable sensor. Further, the detection mechanism may include an array of sensors (e.g., an array of cameras) configured to capture information about the environment surrounding the mowing vehicle 100. For example, the detection mechanism may include an array of cameras configured to capture an array of pictures representing the environment surrounding the mowing vehicle. The detection mechanism may also be a sensor that measures a state of the mowing vehicle. For example, the detection mechanism may be a speed sensor, a heat sensor, wheel sensor, fuel level sensor, battery level sensor, or some other sensor that can monitor the state of a component of the mowing vehicle. Additionally, the detection mechanism may also be a sensor that measures components during implementation of a landscaping action. Whatever the case, the detection mechanism senses information about the operating environment (including the mowing vehicle).

A detection mechanism may be mounted at any point on the mounting mechanism. Depending on where the detection mechanism is mounted relative to the landscaping mechanism, one or the other may pass over a geographic area in the landscaping environment before the other. For example, the detection mechanism may be positioned on the mounting mechanism such that it traverses over a geographic location before the landscaping mechanism as the mowing vehicle moves through the landscaping environment. In another examples, the detection mechanism is positioned to the mounting mechanism such that the two traverse over a geographic location at substantially the same time as the mowing vehicle moves through the filed. Similarly, the detection mechanism may be positioned on the mounting mechanism such that the landscaping mechanism traverses over a geographic location before the detection mechanism as the mowing vehicle moves through the landscaping environment. The detection mechanism may be statically mounted to the mounting mechanism, or may be removably or dynamically coupled to the mounting mechanism. In other examples, the detection mechanism may be mounted to some other surface of the mowing vehicle or may be incorporated into another component of the mowing vehicle. The detection mechanism may be removably coupled to the mowing vehicle.

### Verification mechanism(s)

The mowing vehicle may include a verification mechanism. Generally, the verification mechanism records a measurement of the operating environment and the mowing vehicle may use the recorded measurement to verify or determine the extent of an implemented landscaping action (i.e., a result of the landscaping action).

To illustrate, consider an example where a mowing vehicle implements a landscaping action based on a measurement of the operating environment by the detection mechanism. The verification mechanism records a measurement of the same geographic area measured by the detection mechanism and where mowing vehicle implemented the determined landscaping action. The mowing vehicle then processes the recorded measurement to determine the result of the landscaping action. For example, the verification mechanism may record an image of the geographic region surrounding a graded portion of land identified by the detection mechanism and treated by a landscaping mechanism. The mowing vehicle may apply a detection algorithm to the recorded image to determine the result of the landscaping action.

Information recorded by the verification mechanism can also be used to empirically determine operation parameters of the mowing vehicle that will obtain the desired effects of implemented landscaping actions (e.g., to calibrate the mowing vehicle, to modify landscaping plans, etc.). For instance, the mowing vehicle may apply a calibration detection algorithm to a measurement recorded by the mowing vehicle. In this case, the mowing vehicle determines whether the actual effects of an implemented landscaping action are the same as its intended effects. If the effects of the implemented landscaping action are different than its intended effects, the mowing vehicle may perform a calibration process. The calibration process changes operation parameters of the mowing vehicle such that effects of future implemented landscaping actions are the same as their intended effects. To illustrate, consider the previous example where the mowing vehicle recorded an image of an object in the landscaping environment. There, the mowing vehicle may apply a calibration algorithm to the recorded image to determine whether the construction is appropriately calibrated (e.g., at its intended location in the operating environment). If the mowing vehicle determines that the mowing vehicle is not calibrated (e.g., the landscaping action resulted in some imprecision or inaccuracy), the mowing vehicle may calibrate itself such that future are in the correct location. Other example calibrations are also possible.

The verification mechanism can have various configurations. For example, the verification mechanism can be substantially similar (e.g., be the same type of mechanism as) the detection mechanism or can be different from the detection mechanism. In some cases, the detection mechanism and the verification mechanism may be one in the same (e.g., the same sensor). In an example configuration, the verification mechanism is positioned distal the detection mechanism relative the direction of travel, and the landscaping mechanism is positioned there between. In this configuration, the verification mechanism traverses over a geographic location in the operating environment after the landscaping mechanism and the detection mechanism. However, the mounting mechanism can retain the relative positions of the system components in any other suitable configuration. In some configurations, the verification mechanism can be included in other components of the mowing vehicle.

The mowing vehicle can include any number or type of verification mechanism. In some embodiments, the verification mechanism includes one or more sensors. For example, the verification mechanism can include a multispectral camera, a stereo camera, a CCD camera, a single lens camera, a CMOS camera, hyperspectral imaging system, LIDAR system (light detection and ranging system), a depth sensing system, dynamometer, IR camera, thermal camera, humidity sensor, light sensor, temperature sensor, or any other suitable sensor. Further, the verification mechanism may include an array of sensors (e.g., an array of cameras) configured to capture information about the environment surrounding the mowing vehicle 100. For example, the verification mechanism may include an array of cameras configured to capture an array of pictures representing the operating environment.

### Landscaping mechanism(s)

The mowing vehicle may include a landscaping mechanism. The landscaping mechanism can implement landscaping actions in the operating environment of a mowing vehicle. For instance, a mowing vehicle may include a landscaping mechanism that performs one or more physical actions useful for accomplishing landscaping objectives, i.e., landscaping actions. In some embodiments, the landscaping mechanism may be configured to perform a plurality of different landscaping actions. In other embodiments, the landscaping mechanism may be specific to performing one type of landscaping action.

Depending on the configuration, the mowing vehicle may include various numbers of landscaping mechanisms (e.g., 1, 2, 5, 20, etc.). A landscaping mechanism may be fixed (e.g., statically coupled) to the mounting mechanism or attached to the mowing vehicle. Alternatively, or additionally, a landscaping mechanism may movable (e.g., translatable, rotatable, etc.) on the mowing vehicle. In one configuration, the mowing vehicle includes a single landscaping mechanism. In this case, the landscaping mechanism may be actuatable to align the landscaping mechanism to a particular position and/or orientation. In a second variation, the mowing vehicle includes a landscaping mechanism assembly comprising an array of landscaping mechanisms. In this configuration, a landscaping mechanism may be a single landscaping mechanism, a combination of landscaping mechanisms, or the landscaping mechanism assembly. Thus, either a single landscaping mechanism, a combination of landscaping mechanisms, or the entire assembly may be selected for performing landscaping actions. Similarly, either the single, combination, or entire assembly may be actuated to align with a landscaping environment, as needed. In some configurations, the mowing vehicle may align a landscaping mechanism with an identified object in the operating environment. That is, the mowing vehicle may identify an object in the operating environment and actuate the landscaping mechanism such that its landscaping environment aligns with the identified object.

A landscaping mechanism may be operable between different modes. For example, in a first mode, the landscaping mechanism may be in standby and not presently performing any action. In another mode, the landscaping mechanism may be performing one action. In yet another mode, the landscaping mechanism may be performing a different type of action.

The configuration of the landscaping mechanism may affect parameters of the virtual safety bubble. For example, the landscaping mechanism may be collapsed in a compact configuration or deployed in an expanded configuration, and the control system generating the virtual safety bubble may automatically and/or dynamically adjust parameters of the safety bubble based on whether the landscaping mechanism is in the collapsed configuration or the expanded configuration. In another example, the landscaping mechanism may be operable for multiple landscaping actions. Based on the landscaping action, the control system may automatically and/or dynamically adjust parameters of the safety bubble.

**In** one or more embodiments, the landscaping mechanism may be a device for mowing grass or other plant matter to a target height. The landscaping mechanism is capable of cutting grass or other plant matter to a range of heights. An operator can set which height to mow the plant matter. The landscaping mechanism may be a mowing deck inclusive of one or more rotary blades positioned below the vehicle. As the rotary blades are spun, the blades catch and cut the plant matter. Movement of the vertical height of the rotary blade, i.e., relative to the vehicle chassis, affects the mowing height.

### Control system(s)

The mowing vehicle includes a control system. The control system controls operation of the various components and systems on the mowing vehicle. For instance, the control system can obtain information about the operating environment, processes that information to identify a landscaping action to implement, and implement the identified landscaping action with system components of the mowing vehicle. The control system may further aid in the navigation of the mowing vehicle around the operating environment. Navigation may include collecting and analyzing data relating to the environment from one or more sensors and generating navigation instructions based on the data. More details on the control system are included below in other figures.

The control system can receive information from the detection mechanism, the verification mechanism, the landscaping mechanism, and/or any other component or system of the mowing vehicle. For example, the control system may receive measurements from the detection mechanism or verification mechanism, or information relating to the state of a landscaping mechanism or implemented landscaping actions from a verification mechanism. Other information is also possible.

Similarly, the control system can provide input to the detection mechanism, the verification mechanism, and/or the landscaping mechanism. For instance, the control system may be configured input and control operating parameters of the mowing vehicle (e.g., speed, direction). Similarly, the control system may be configured to input and control operating parameters of the detection mechanism and/or verification mechanism. Operating parameters of the detection mechanism and/or verification mechanism may include processing time, location and/or angle of the detection mechanism, image capture intervals, image capture settings, etc. Other inputs are also possible. Finally, the control system may be configured to generate machine inputs for the landscaping mechanism. That is translating a landscaping action of a landscaping plan into machine instructions implementable by the landscaping mechanism.

The control system can be operated by a user operating the mowing vehicle, wholly or partially autonomously, operated by a user connected to the mowing vehicle by a network, or any combination of the above. For instance, the control system may be operated by an operator sitting in a cabin of the mowing vehicle, or the control system may be operated by an operator connected to the control system via a wireless network. In another example, the control system may implement an array of control algorithms, machine vision algorithms, decision algorithms, etc. that allow it to operate autonomously or partially autonomously.

The control system may be implemented by a computer or a system of distributed computers. The computers may be connected in various network environments. For example, the control system may be a series of computers implemented on the mowing vehicle and connected by a local area network. In another example, the control system may be a series of computers implemented on the mowing vehicle, in the cloud, a client device and connected by a wireless area network.

The control system can apply one or more computer models to determine and implement landscaping actions in the landscaping environment. For example, the control system can apply an object detection model to images acquired by the detection mechanism to identify and classify objects in the sensor data. Based on the detected objects, the control system may determine parameters for landscaping actions to be performed by the landscaping mechanism. The control system may be coupled to the mowing vehicle such that an operator (e.g., a driver) can interact with the control system. In other embodiments, the control system is physically removed from the mowing vehicle and communicates with system components (e.g., detection mechanism, landscaping mechanism, etc.) wirelessly.

In some configurations, the mowing vehicle may additionally include a communication apparatus, which functions to communicate (e.g., send and/or receive) data between the control system and a set of remote devices. The communication apparatus can be a Wi-Fi communication system, a cellular communication system, a short-range communication system (e.g., Bluetooth, NFC, etc.), or any other suitable communication system.

### Other Machine Components

In various configurations, the mowing vehicle may include any number of additional components.

For instance, the mowing vehicle may include a mounting mechanism. The mounting mechanism provides a mounting point for the components of the mowing vehicle. That is, the mounting mechanism may be a chassis or frame to which components of the mowing vehicle may be attached but could alternatively be any other suitable mounting mechanism. More generally, the mounting mechanism statically retains and mechanically supports the positions of the detection mechanism, the landscaping mechanism, and the verification mechanism. In an example configuration, the mounting mechanism extends outward from a body of the mowing vehicle such that the mounting mechanism is approximately perpendicular to the direction of travel. In some configurations, the mounting mechanism may include an array of landscaping mechanisms positioned laterally along the mounting mechanism. In some configurations, the mowing vehicle may not include a mounting mechanism, the mounting mechanism may be alternatively positioned, or the mounting mechanism may be incorporated into any other component of the mowing vehicle.

The mowing vehicle may include locomoting mechanisms. The locomoting mechanisms may include any number of wheels, continuous treads, articulating legs, or some other locomoting mechanism(s). For instance, the mowing vehicle may include a first set and a second set of coaxial wheels, or a first set and a second set of continuous treads. In the either example, the rotational axis of the first and second set of wheels/treads are approximately parallel. Further, each set is arranged along opposing sides of the mowing vehicle. Typically, the locomoting mechanisms are attached to a drive mechanism that causes the locomoting mechanisms to translate the mowing vehicle through the operating environment. For instance, the mowing vehicle may include a drive train for rotating wheels or treads. In different configurations, the mowing vehicle may include any other suitable number or combination of locomoting mechanisms and drive mechanisms.

The mowing vehicle may also include one or more coupling mechanisms (e.g., a hitch). The coupling mechanism functions to removably or statically couple various components of the mowing vehicle. For example, a coupling mechanism may attach a drive mechanism to a secondary component such that the secondary component is pulled behind the mowing vehicle. In another example, a coupling mechanism may couple one or more landscaping mechanisms to the mowing vehicle.

The mowing vehicle may additionally include a power source, which functions to power the system components, including the detection mechanism, control system, and landscaping mechanism. The power source can be mounted to the mounting mechanism, can be removably coupled to the mounting mechanism, or can be incorporated into another system component (e.g., located on the drive mechanism). The power source can be a rechargeable power source (e.g., a set of rechargeable batteries), an energy harvesting power source (e.g., a solar system), a fuel consuming power source (e.g., a set of fuel cells or an internal combustion system), or any other suitable power source. In other configurations, the power source can be incorporated into any other component of the mowing vehicle.

### III.B EXAMPLE MOWING VEHICLE

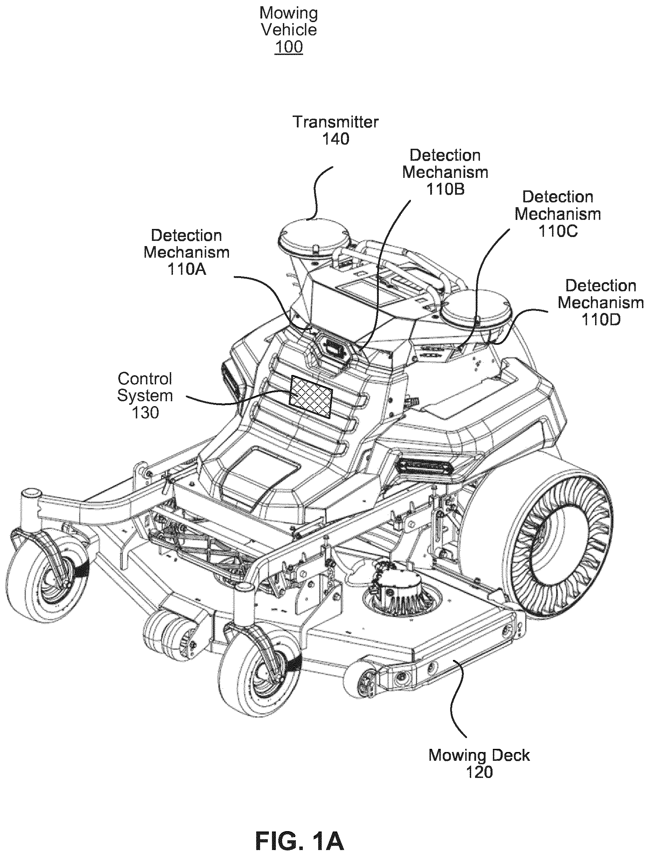

FIGs. 1A-1C illustrate a number of views of an example mowing vehicle 100, in accordance with one or more embodiments. The mowing vehicle 100 is configured for performing a mowing action. The mowing vehicle 100 may operate autonomously, manually, or in a hybrid manner.

FIG. 1A illustrates a front perspective view of the mowing vehicle 100, in accordance with one or more embodiments. The front view illustrates the mowing vehicle 100 including the detection mechanisms 110A, 110B, 110C, and 110D, a mowing deck 120, a control system 130, and a transmitter 140.

The detection mechanisms 110A, 110B, 110C, and 110D may measure or detect information describing the operating environment of the mowing vehicle 100. In one or more embodiments, the detection mechanisms 110 may be cameras, LIDAR sensors, other depth-and-ranging sensors, or some combination thereof. In the embodiment shown, there are two detection mechanisms 110A & 110B (e.g., cameras) oriented forward, along a primary direction of travel. Two detection mechanisms 110C & 110D (e.g., cameras) are oriented towards a left side of the vehicle.

The mowing deck 120 is an embodiment of a landscaping mechanism. In the embodiment shown, the mowing deck 120 is situated towards a bottom of the mowing vehicle 100, proximate to the ground. The mowing deck 120 may include a large shield, under which are one or more motorized blades for mowing plants in the environment. Each of the motorized blades may be individually addressable and operable by the mowing vehicle 100. The mowing deck 120 may be further coupled to a chute that is configured to guide debris ingested by the mowing vehicle 100, i.e., the mowing deck 120, in a particular direction. In some embodiments, a vessel may be implemented and coupled to the chute, such that the vessel is configured to store debris from the mowing vehicle 100 during operation. The motorized blades may further include a braking system for emergent stopping of the blades from spinning.

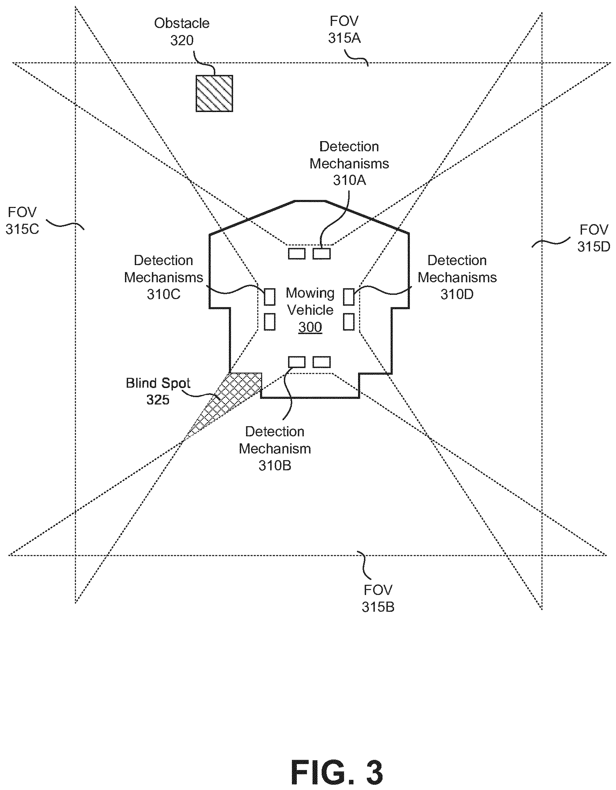

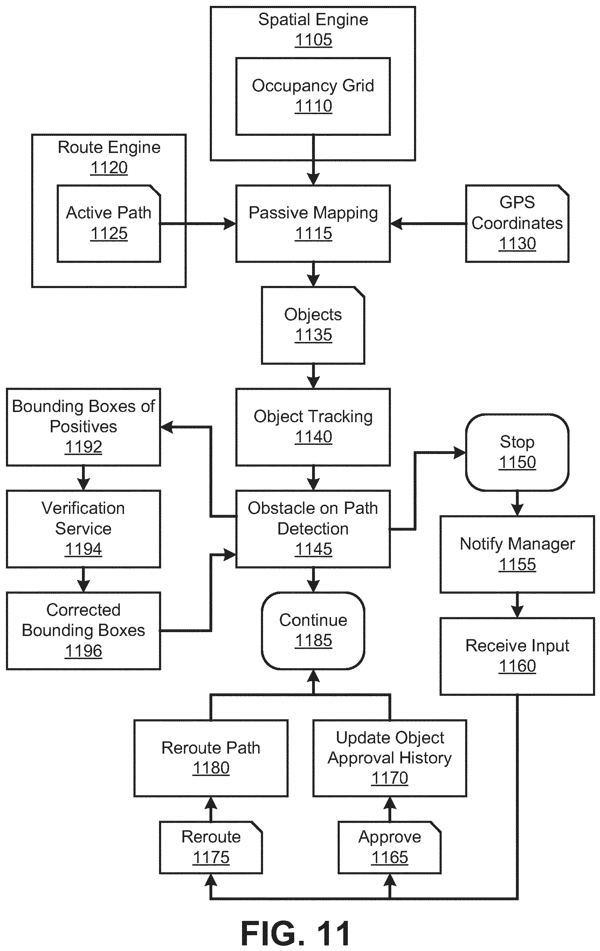

The control system 130 analyses data received by the detection mechanisms 110 and generates control signals for controlling operation of the mowing vehicle 100. In one or more embodiments, the control system is further configured to generate one or more virtual safety bubbles for safe navigation of the mowing vehicle 100. The control system 130 may generate the one or more virtual safety bubbles based on the configuration of the mowing vehicle 100. Generation of the safety bubbles is further described below in FIGs. 3-10. With the safety bubbles, the control system 130 may identify and track objects in the operating environment to determine whether the objects in the operating environment would create a safety concern, e.g., typically if the mowing vehicle 100 and the object are trajected to collide. If the object interacts with the virtual safety bubble, the control system 130 may enact responsive measures to promote safe navigation. Example responsive measures are described below in FIGs. 11-19. The control system 130 can be positioned anywhere on the mowing vehicle 100, e.g., internally, externally, etc.

The transmitter 140 provides for wireless communication with other computing devices or systems, e.g., across a wireless network. The transmitter 140 may be a component of the control system 130. The transmitter 140 may be configured to receive and to transmit communications.

In some embodiments, the mowing vehicle 100 further includes an alert system for generating alerts to caution any passerby in the operating environment. The alert system may include a speaker system for generating audio alerts, one or more light emitters for generating visual alerts, another type of emitter, or some combination thereof.

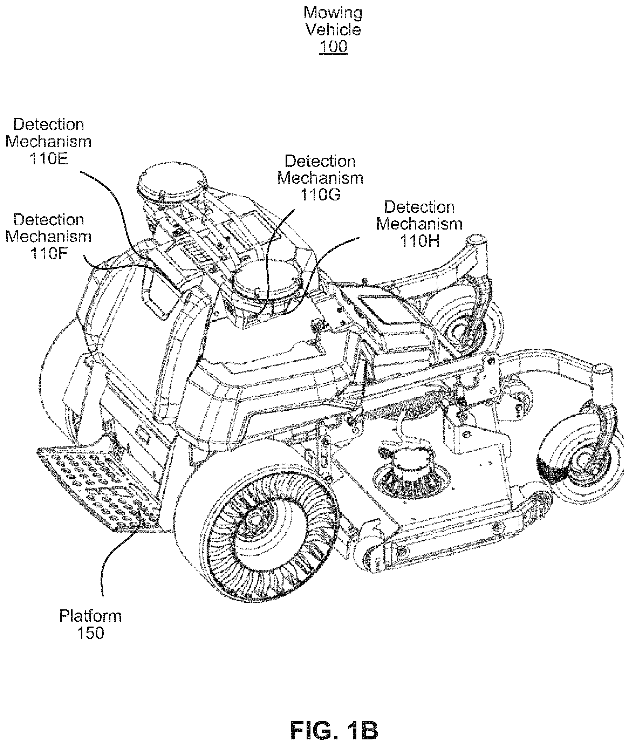

FIG. 1B illustrates a back perspective view of the mowing vehicle 100, in accordance with one or more embodiments. The mowing vehicle 100 may include additional detection mechanisms 110E, 110F, 110G, and 110H. Detection mechanisms 110E & 110F are oriented rearward. Detection mechanisms 110G & 110H are oriented to the right of the vehicle. The mowing vehicle 100 may further include a platform 150 for an operator to ride along and/or to manually operate the mowing vehicle 100.

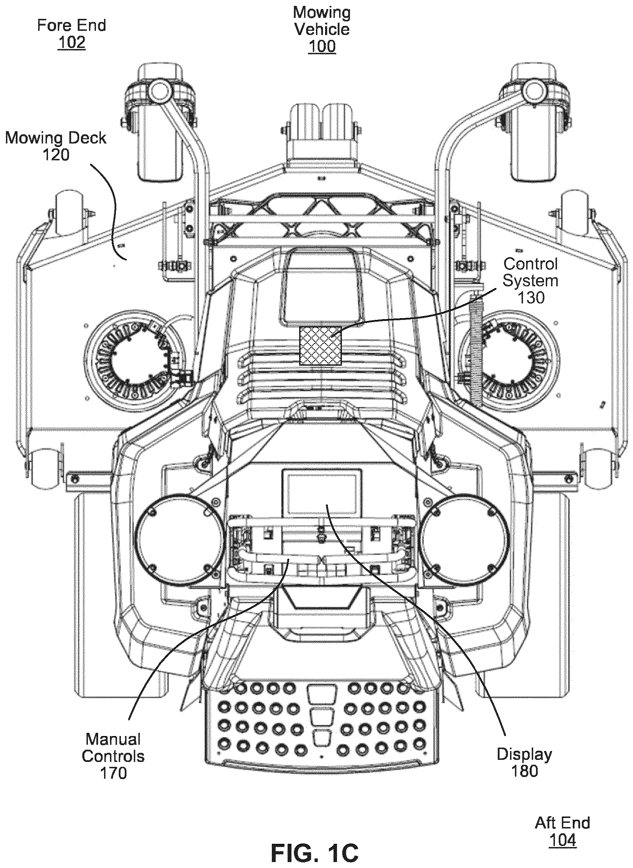

FIG. 1C illustrates a top-down view of the mowing vehicle 100, in accordance with one or more embodiments. The top-down view further illustrates manual controls 170 and a display 180.

The manual controls 170 may include a switch for switching the mowing vehicle 100 from autonomous operation into manual operation, or vice versa. The manual controls 170 may further include other manual inputs for controlling the operation of the mowing vehicle 100, e.g., for navigating the mowing vehicle 100, for activating the mowing deck 120, engaging the alert system, etc.

The display 180 is an electronic display that is configured to provide visual content to the operator. The display 180 may present a state of the mowing vehicle 100. The display 180 may further present a user interface, which may present interactable elements for an operator to further provide manual input in the operation of the mowing vehicle 100.

### III.C SYSTEM ENVIRONMENT

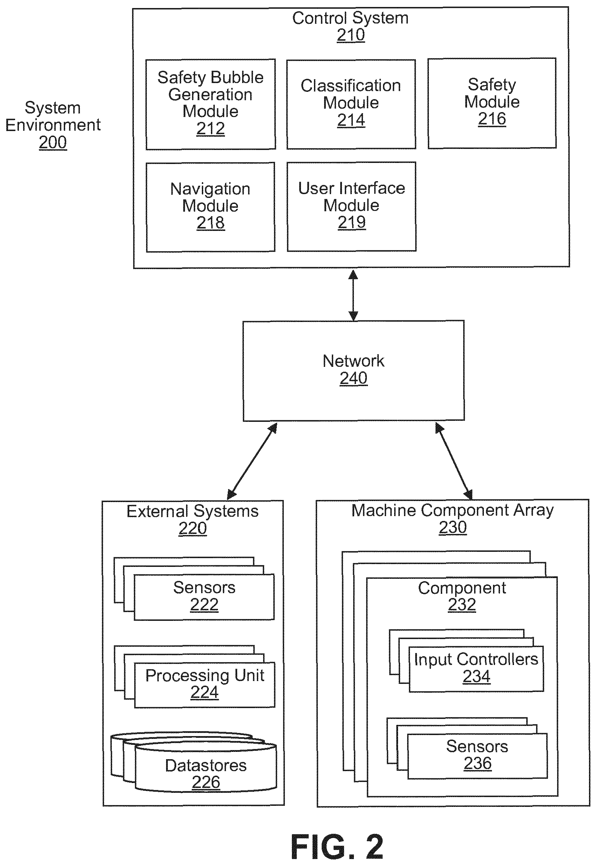

FIG. 2 is a block diagram of the system environment 200 for the mowing vehicle 100, in accordance with one or more embodiments. In this example, the control system 210 (e.g., control system) is connected to external systems 220 and a machine component array 230 via a network 240 within the system environment 200.

The external systems 220 are any system that can generate data representing information useful for determining and implementing landscaping actions in a landscaping environment. External systems 220 may include one or more sensors 222, one or more processing units 224, and one or more datastores 226. The one or more sensors 222 can measure the landscaping environment, the operating environment, the mowing vehicle 100, etc. and generate data representing those measurements. For instance, the sensors 222 may include a rainfall sensor, a wind sensor, heat sensor, a camera, etc. The processing units 2240 may process measured data to provide additional information that may aid in determining and implementing landscaping actions in the landscaping environment. Datastores 226 store historical information regarding the mowing vehicle 100, the operating environment, the landscaping environment, etc. that may be beneficial in determining and implementing landscaping actions in the landscaping environment. For instance, the datastore 226 may store results of previously implemented landscaping plans and landscaping actions for a landscaping environment, a nearby landscaping environment, and or the region. The historical information may have been obtained from one or more mowing vehicles (i.e., measuring the result of a landscaping action from a first mowing vehicle with the sensors of a second mowing vehicle). Further, the datastore 226 may store results of specific landscaping actions in the landscaping environment, or results of landscaping actions taken in nearby landscaping environments having similar characteristics. The datastore 226 may also store historical weather, flooding, landscaping environment use, operations completed, operations scheduled, etc. for the landscaping environment and the surrounding area. Finally, the datastores 226 may store any information measured by other components in the system environment 200. The external systems 220 may be implemented on the cloud.

The machine component array 230 includes one or more components 232. Components 222 are elements of the mowing vehicle 100 that can take landscaping actions (e.g., a landscaping mechanism). As illustrated, each component has one or more input controllers 234 and one or more sensors 236, but a component may include only sensors 236 or only input controllers 234. An input controller 234 controls the function of the component 232. For example, an input controller 234 may receive machine commands via the network 240 and actuate the component 230 in response. A sensor 226 generates data representing measurements of the operating environment and provides that data to other systems and components within the system environment 200. The measurements may be of a component 232, the mowing vehicle 100, the operating environment, etc. For example, a sensor 226 may measure a configuration or state of the component 222 (e.g., a setting, parameter, power load, etc.), measure conditions in the operating environment (e.g., moisture, temperature, etc.), capture information representing the operating environment (e.g., images, depth information, distance information), and generate data representing the measurement(s).

The control system 210 receives information from external systems 220 and the machine component array 230 and implements a landscaping plan in a landscaping environment using a mowing vehicle 100. Before implementing the landscaping plan, the mowing vehicle verifies that it is safe to operate. To do so, the control system 210 receives a notification from a manager that the environment surrounding the mowing vehicle is safe for operation and empty of obstacles. The control system 210 verifies, using captured images, that there are no obstacles in the environment surrounding the mowing vehicle. The control system 210 generates a virtual safety bubble for the landscaping actions based on a configuration of the mowing vehicle. While the mowing vehicle is implementing the landscaping actions, the control system 210 continually identifies and locate obstacles in the environment. If one of the obstacles is within the virtual safety bubble, the control system 210 may stop operation or enact preventive measures.

The control system 210 includes a safety bubble generation module 212, a classification module 214, a safety module 216, a navigation module 218, and a user interface module 219. In other embodiments, the control system 210 has additional/fewer modules. In other embodiments, the modules may be variably configured such that functions of one may be performable by one or more other modules.

The safety bubble generation module 212 generates a virtual safety bubble for the mowing vehicle 100. The virtual safety bubble may be a three-dimensional shape around the mowing vehicle 100. In other embodiments, the virtual safety bubble may have a belt shape, e.g., a wall of certain height that surrounds the mowing vehicle 100. Various other shapes and sizes may be envisioned. The safety bubble generation module 212 sets the shape and size of the virtual safety bubble based on the configuration of the mowing vehicle 100. For example, the safety bubble generation module 212 may determine a shape and/or a size of the virtual safety bubble based on whether the mowing vehicle 100 is in a first configuration for navigating to an operating environment or in a second configuration for performing a landscaping plan. The safety bubble generation module 212 may dynamically adjust the virtual safety bubble based on sensor data. For example, the safety bubble generation module 212 may increase the virtual safety bubble size in response to a sunset darkening the operating environment.

The classification module 214 classifies objects in the images captured by the cameras (embodiment of sensors 222) implemented on the mowing vehicle100. The classification module 214 may utilize one or more models to classify pixels relating to objects the image. One model may identify obstacles as objects not part of the landscaping operation. For example, the model may classify rows of crop as non-obstacles but would classify a wild fox or a large boulder as an obstacle. Another model may perform image segmentation, classifying pixels for various object types, e.g., the ground, the sky, foliage, obstacles, etc. Yet another model may calculate a velocity of objects relative to the mowing vehicle 100, e.g., using one or more visual odometry methods. And still another model may predict depth of the objects from the camera, e.g., utilizing a depth estimation model trained to predict the depth based on image data. Depth generally refers to the distance between the mowing vehicle and pixels or objects in the images. For example, a first object present in an image can be determined to be at a depth of 5 meters from the mowing vehicle. The classification module 214 may further generate 3D point cloud representations of objects within a virtual operating environment, allowing for tracking of objects. The various models may input other sensor data (captured by the sensors 222 or the sensors 236) to aid in the classification, e.g., LIDAR data, temperature measurements, etc.

The safety module 216 evaluates whether obstacles are within the virtual safety bubble. The safety module 216 may utilize a depth estimation model to predict depths of obstacles relative to the mowing vehicle 100. If an obstacle has a depth that is below the virtual safety below, i.e., some portion of the obstacle breaks the barrier of virtual safety bubble, then the safety module 216 provides that notice to the navigation module 218, e.g., for ceasing operation or enacting preventive measures.

The navigation module 218 navigates the mowing vehicle 100. The navigation module 218 generates navigation instructions based on a landscaping plan. The landscaping plan may include one or more landscaping operations to be completed. The navigation module 218 may chart a route to navigate the vehicle. The navigation module 218 may adjust the navigation route based on sensor data. The navigation module 218 may receive notices from the safety module 216 that an obstacle has breached the virtual safety bubble. In response to the notice, the navigation module 218 may cease operations, enact other preventive measures, or some combination thereof. In one example of a prevent measure, the navigation module 218 can bring the mowing vehicle 100 to a stop when notice is given that an obstacle has breached the virtual safety bubble. As another example of a prevent measure, the navigation module 218 can chart a route around the obstacle to prevent collision. Additional details relating to navigation by the navigation module 218 is described in FIGs. 11-19.

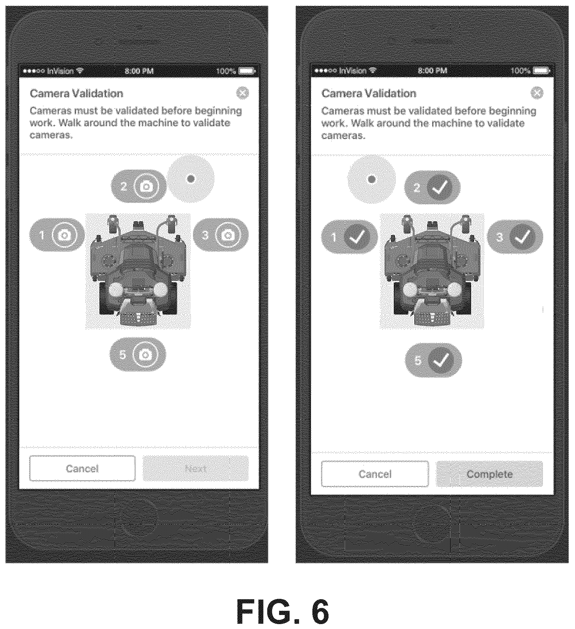

The user interface module 219 maintains a graphical user interface (GUI) for displaying information to the manager of the mowing vehicle 100 and receiving inputs from the manager. The user interface module 219 may graphically illustrate the mowing vehicle 100 in operation, e.g., when moving along a path, or when performing one or more landscaping actions. The GUI may also display any obstacles or other objects in the operating environment. The GUI may further be configured to receive inputs to control the mowing vehicle 100. Example inputs include toggling a speed to the mowing vehicle 100, manual adjustment of the virtual safety bubble, etc. In one embodiment, the GUI may notify a manager of the mowing vehicle 100 that an obstacle has breached the virtual safety bubble, the GUI may request action or input from the manage in how to respond. Example user interfaces are further described in FIGs. 6-10.

In one or more embodiments, the models used by the control system 110 may be trained as machine-learning models using training data. The training may be supervised, unsupervised, or semi-supervised. Various types of machine-learning model architectures may be implemented, e.g., neural networks, decision trees, support vector machine learning, etc.

The network 240 connects nodes of the system environment 200 to allow microcontrollers and devices to communicate with each other. In some embodiments, the components are connected within the network as a Controller Area Network (CAN). In this case, within the network each element has an input and output connection, and the network 250 can translate information between the various elements. For example, the network 250 receives input information from the camera array 210 and component array 220, processes the information, and transmits the information to the control system 230. The control system 230 generates a landscaping action based on the information and transmits instructions to implement the landscaping action to the appropriate component(s) 222 of the component array 220.

Additionally, the system environment 200 may be other types of network environments and include other networks, or a combination of network environments with several networks. For example, the system environment 200, can be a network such as the Internet, a LAN, a MAN, a WAN, a mobile wired or wireless network, a private network, a virtual private network, a direct communication line, and the like.

### IV. OBSTRUCTED VIEWS AND UNOBSTRUCTED VIEWS

As described above, a mowing vehicle is configured with one or more detection mechanisms ("detection system") to measure the environment. In one configuration the detection system may be an array of detection mechanisms configured to capture images of the environment. Image data in the image represent the various objects in the environment surrounding the mowing vehicle. Thus, the detection system is configured to capture image data of the environment. In other examples, the detection mechanisms may capture depth data, e.g., from one or more depth-and-ranging sensors.

The detection system has a field of view, and because the detection system is an array of detection mechanisms, the detection system's field of view may comprise of several landscaping environments of view that may be composited together to form a 360-degree view. That is, each detection mechanism has its own field of view, and the landscaping environments of view, in aggregate, form the field of view of the detection system.

There may be one or more blind spots in a field of view caused by the configuration of the detection system. Some blind spots can include areas outside of reach of any detection mechanism and obstructed views, e.g., views within the field of view of the detection system but obstructed by one or more objects. Obstructed views comprise image data in images where an object obstructs an object or objects behind it (such that obstructed objects are obscured from view). Unobstructed views comprise image data in images where no objects obstruct an object or objects behind it. For example, consider a detection mechanism capturing images of a tire coupled to the mowing vehicle and the surrounding environment. Because the tire is obscuring image data of objects behind the tire (e.g., ground, rocks, etc.) it is an obstructed view. The remainder of the image is an unobstructed view because there are no objects obscuring other objects. Or, in another example, an operator riding along the mowing vehicle, may obstruct one or more of the detection mechanisms (e.g., the rearward detection mechanism 110C & 110D in FIG. 1B).

Obstructed views are problematic in autonomous construction due to their inherent safety issues. For example, an object that may be a significant obstacle may be obscured by another object in an obstructed view. The mowing vehicle may therefore be unable to identify and account for a problematic obstacle. Methods are presented herein to establish a virtual safety bubble to prevent obstacles from entering obstructed views of the mowing vehicle.

FIG. 3 illustrates a mowing vehicle 300 (an embodiment of the mowing vehicle 100) outfitted with a detection system. The mowing vehicle 300 has a detection system with a total of eight detection mechanisms 310. A first pair 310A of detection mechanisms is positioned near a fore end of the mowing vehicle 300 and oriented forward with a field of view 315A. A second pair 310B of detection mechanisms is positioned near an aft end of the mowing vehicle 300 and oriented rearward with a field of view 315B. A third pair 310C of detection mechanisms is positioned near a left side of the mowing vehicle 300 and oriented leftward with field of view 315C. And a fourth pair 310D of detection mechanisms is positioned near a right side of the mowing vehicle 300 and oriented rightward with field of view 315D. As noted above the detection system's field of view may aggregate the individual fields of view 315 from the detection mechanisms.

FIG. 3 also illustrates an obstacle 320. The obstacle 320 is just off to the front left of the mowing vehicle 300. The mowing vehicle 300 is configured to apply an obstacle detection model to images captured by the detection mechanism to identify the obstacles in the environment. That is, the mowing vehicle 300 employs the obstacle detection model to determine that pixels in images represent obstacles and locates the approximate location of those obstacles in the environment (e.g., by estimating depth).

As described above, the detection system of the mowing vehicle 300 includes various blind spots. Blind spots are areas in the environment not visible by the mowing vehicle because, for instance, a portion of the mowing vehicle obstructs the view (e.g., behind a tire), or the detection mechanisms are nor positioned to capture that portion of the environment (e.g., under the tractor). There may be inherent blind spots based on the positionings and orientations of the detection mechanisms 310. For example, blind spot 325 is a portion of the surrounding environment that is not in the field of view of any detection mechanism 310. Other blind spots may arise from occlusion by one or more objects in the environment, e.g., ground behind obstacle 320 is occluded from view.

### V. VERIFYING NO OBSTACLES

In one or more embodiments, the mowing vehicle may be configured to only begin autonomously implementing landscaping actions if a manager of the mowing vehicle verifies the environment. That is, a manager of the mowing vehicle must verify that there are no obstacles in obstructed and/or unobstructed views of the mowing vehicle. In essence, the manager must walk around the mowing vehicle to verify that there are no obstacles in areas undetectable by the detection system. In some configurations, the verification process may include playing sirens and flashing lights to make it apparent that the mowing vehicle is about to begin autonomously construction. The lights and sirens make it more likely that any humans in the environment will exit the environment.

As part of the verification process, the mowing vehicle may communicate with a control system operated by the manager. That is, the mowing vehicle may transmit and receive information from a control system operated by a manager. For example, the mowing vehicle may transmit a request for the manager to verify the environment, and the mowing vehicle may receive a verification of the environment in response (once the manager verifies the environment).

### VI. GENERATING A VIRTUAL SAFETY BUBBLE

The mowing vehicle includes a virtual safety bubble generation module configured to generate a virtual safety bubble. A virtual safety bubble is an area in the environment which enables the mowing vehicle to operate autonomously without colliding with obstacles. A virtual safety bubble may be an area in the environment (1) directly surrounding the mowing vehicle, (2) in a forward path of the mowing vehicle, (3) in a backward path from the mowing vehicle, (4) along an expected path of the mowing vehicle, and/or some area in the environment.

The mowing vehicle generates the virtual safety bubble based on the configuration of the mowing vehicle. Here, "configuration" is a term used to describe several aspects of the mowing vehicle, implement, and environment which can be used to generate the virtual safety bubble. A non-exhaustive list of aspects of the mowing vehicle configuration that may affect the virtual safety bubble follows.

Machine Path. The machine path may describe a current path of a machine or an expected path of the machine. The machine path may be in any direction relative to the current position of the mowing vehicle. Additionally, the virtual safety bubble for the machine path may consider machine characteristics of the mowing vehicle. E.g., the virtual safety bubble for a large mowing vehicle along its machine path is larger than that of a smaller mowing vehicle.

Vehicle Type. The vehicle type indicates one of a plurality of different vehicles in operation at the landscaping environment.

Landscaping Mechanism Configuration. The configuration of the landscaping mechanism indicates a state of the landscaping mechanism. For example, the configuration may indicate a position and/or orientation of one or more parts of landscaping mechanism. The configuration may indicate whether the landscaping mechanism is actuated or not.

Velocity. Velocity may be a current or scheduled velocity of the mowing vehicle. As implemented by the mowing vehicle, velocity may be a scalar or a vector.

Acceleration. Acceleration be a current or scheduled accretion of the mowing vehicle. As implemented by the mowing vehicle, acceleration may be a scalar or a vector.

Expected Obstacle Characteristics. Expected obstacle characteristics are characteristics of obstacles a mowing vehicle may expect to find in its environment. For instance, a mowing vehicle operating near building may expect to find different obstacles than one operating in a landscaping environment. As such, each environment may have correspondingly different virtual safety bubbles.

Implement Type. Implement type is the type of implement being employed by the mowing vehicle (if any). As an example, an implement may be some component for performing a landscaping action that can be coupled and/or decoupled from the vehicle.

Mounting Mechanism Type. Mounting mechanism type describes how various parts of the mowing vehicle are attached to the structure. For instance, a mounting mechanism may be a hitch, and the hitch may be a mobile hitch or a static hitch. Accordingly, the type of mounting mechanism may indicate parameters for the virtual safety bubble.

Type of Landscaping actions. Landscaping actions are described in detail above. Different landscaping actions may indicate different parameters for the virtual safety bubble. For instance, a virtual safety bubble for mowing may be different than a virtual safety bubble for fertilizing a landscaping environment. The mowing vehicle's control system may determine a direction that a landscaping action would face to aid in determination of the parameters of the virtual safety bubble (e.g., the shape and the size of the virtual safety bubble). For example, the control system can set a shape of the virtual safety bubble to be predominantly in front of the mowing vehicle based on the landscaping action. In the example of mowing, the control system may set the shape of the virtual safety bubble to account for a positioning of a chute that guides debris from the mowed grass.

Implementation Characteristics for Landscaping actions. Implementation characteristics describes the particulars of how a mowing vehicle implements a landscaping action.

Machine Characteristics for Mowing vehicle. Machine characteristics describe the physical manifestation of the mowing vehicle. That is, the size, shape, weight, and spatial characteristics of the mowing vehicle. The mowing vehicle may store a digital representation of its machine characteristics that may be accessed when generating a virtual safety bubble.

Implement Characteristics for Implement. Implement characteristics describe the physical manifestation of the construction implement. That is, the size, shape, and spatial characteristics of the construction implement. The construction implement may store a digital representation of its implement characteristics that may be accessed when generating a virtual safety bubble.

Characteristics of Other Attachments. Other attachments may include any one component that is attached to the mowing vehicle or implement. For example, the mowing vehicle can be rigged with additional flood lights which may expand the dimensional profile of the mowing vehicle.

Environment Characteristics. Environment characteristics describes the working environment of the mowing vehicle. Some example environment characteristics include the size, shape, and spatial characteristics of the landscaping environment in which the mowing vehicle operates. Environment characteristics may also describe the weather.

Obstacle Type. Obstacles may be dynamic (i.e., moving) or static (i.e., unmoving). The obstacle type may further classify, e.g., between humans or non-humans, between construction equipment, etc. The mowing vehicle may generate a different virtual safety bubble for an identified dynamic and/or static obstacle.

Manager Input. Manager input is information from the manager that may be used to generate a virtual safety bubble. Manager input may include any of the aforementioned configuration information.

Local Regulations. The control system can maintain a log of different local regulations depending on a geographical location of the mowing vehicle. In one or more examples, a first country may have different regulations than a second country; a first state may have different regulations than a second state; a first city may have different regulations than a second city; or some combination thereof. The different regulations can limit the landscaping actions, e.g., speed limit, permitted period of operation, permitted weather for operation, other regulations, etc.

To refresh, the mowing vehicle utilizes a machine configuration to determine a virtual safety bubble around the mowing vehicle. The machine configuration may be any of the aforementioned configuration information. The virtual safety bubble may be represented as a relative distance, an absolute distance, a depth, a time (e.g., based on velocity and/or acceleration), legal requirements, or any other suitable metric for quantifying the virtual safety bubble.

The mowing vehicle continually monitors the environment such that no obstacles are within the virtual safety bubble. That is, the detection mechanisms capture images, the mowing vehicle applies an obstacle identification model to the images and identifies and locates an obstacle in the environment. If the mowing vehicle identifies an obstacle in the virtual safety bubble, it enacts responsive measures to provide for safe operation of the mowing vehicle.

Notably, the mowing vehicle may treat obstacles and objects in different manners. For instance, a mowing vehicle may identify a large pile of leaves in a virtual safety bubble, identify it as an object, and continue performing landscaping actions because the leaves would not damage the mowing vehicle on contact. To the contrary, a mowing vehicle may identify a log in a virtual safety bubble, identify it as an object, classify it as an obstacle, and cease performing landscaping actions because the log would damage the mowing vehicle in a collision.

In some examples, the mowing vehicle may treat different types of obstacles in different manners. For instance, a dynamic obstacle (e.g., a human, a moving car, etc.) may warrant different virtual safety bubbles relative to a static obstacle (e.g., a log, a chair, etc.). Naturally, dynamic obstacles likely indicate larger virtual safety bubbles because of their ability to move through the environment, while static obstacles likely indicate smaller virtual safety bubbles because they remain stationary. In some examples, the mowing vehicle may treat humans in a different manner than all other obstacles. For instance, the mowing vehicle may generate a virtual safety bubble for humans that is larger than all other objects and obstacles. In one or more embodiments, the mowing vehicle may generate a plurality of virtual safety bubbles utilized concurrently. A first virtual safety bubble may be defined for a first class of objects (e.g., humans), and a second virtual safety bubble may be defined for a second class of objects (e.g., obstacles).

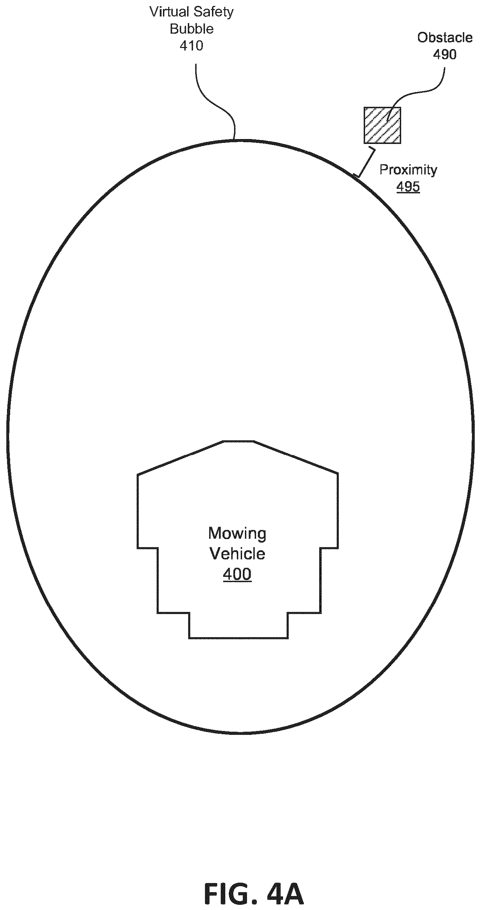

FIGs. 4A-4D illustrate different example safety bubble configurations.

FIG. 4A illustrates a first virtual safety bubble around a mowing vehicle, in accordance with one or more embodiments. In a one bubble example, the mowing vehicle 400 may generate and utilize a single virtual safety bubble 410. As operation changes, the configuration of the mowing vehicle 400 likewise changes. Based on the changed configuration, the control system may modify the dimensionality of the virtual safety bubble 410. The mowing vehicle 400 may detect a proximity of the obstacle 490 to the virtual safety bubble 410. If within a threshold proximity, the mowing vehicle 400 may begin enacting responsive measures. If the virtual safety bubble 410 is breached, the mowing vehicle 400 may enact additional responsive measures.

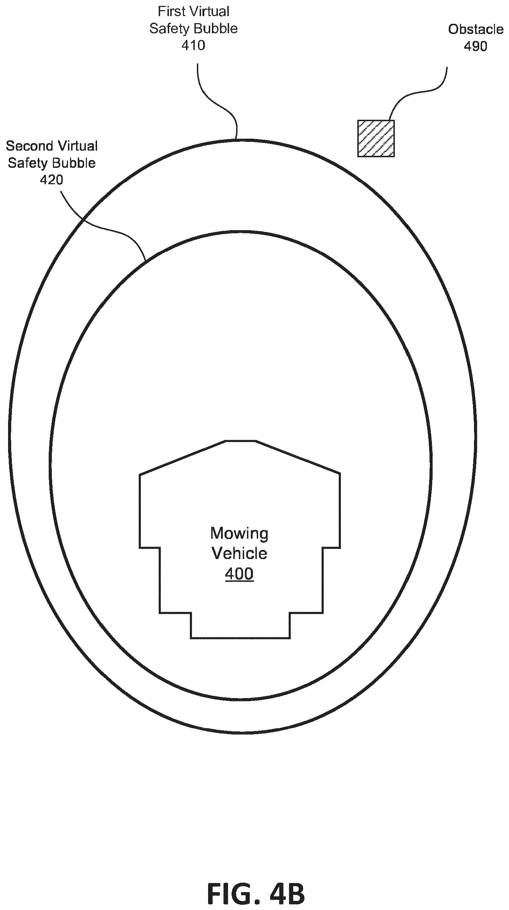

FIG. 4B illustrates two virtual safety bubbles around the mowing vehicle 400, in accordance with one or more embodiments. In this embodiment, the mowing vehicle 400 generates two virtual safety bubbles 410 and 420, with different logic for objects interacting with each virtual safety bubble. For example, if the obstacle 490 breaches the first virtual safety bubble 410 (the outermost one), the mowing vehicle 400 may generate alerts. If the obstacle 490 breaches the second virtual safety bubble 420, the mowing vehicle 400 may terminate or otherwise modify operation of the mowing vehicle 400 (e.g., to route around the obstacle 490, to shutoff a landscaping mechanism, etc.).

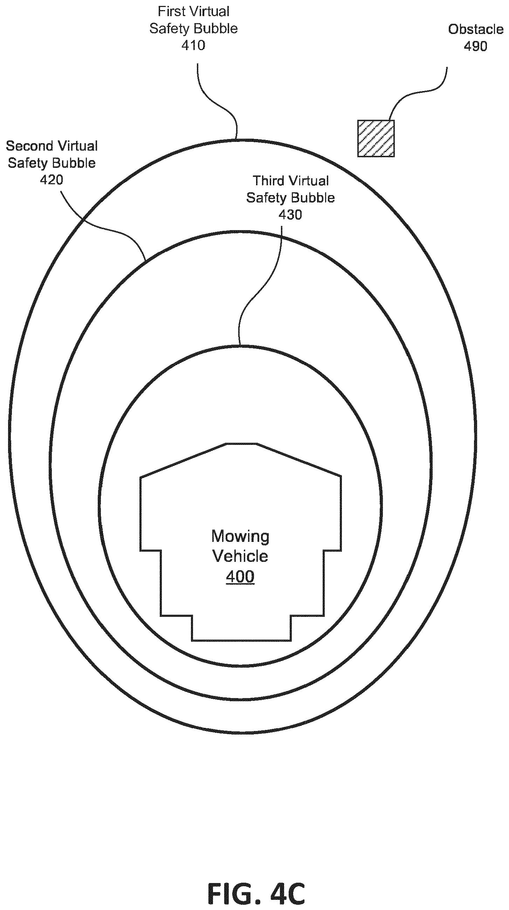

FIG. 4C illustrates three virtual safety bubbles around the mowing vehicle 400, in accordance with one or more embodiments. The mowing vehicle 400 may generate the first virtual safety bubble 410, the second virtual safety bubble 420, and the third virtual safety bubble 430. Each safety bubble may be accompanied with different logic for enacting responsive measures.

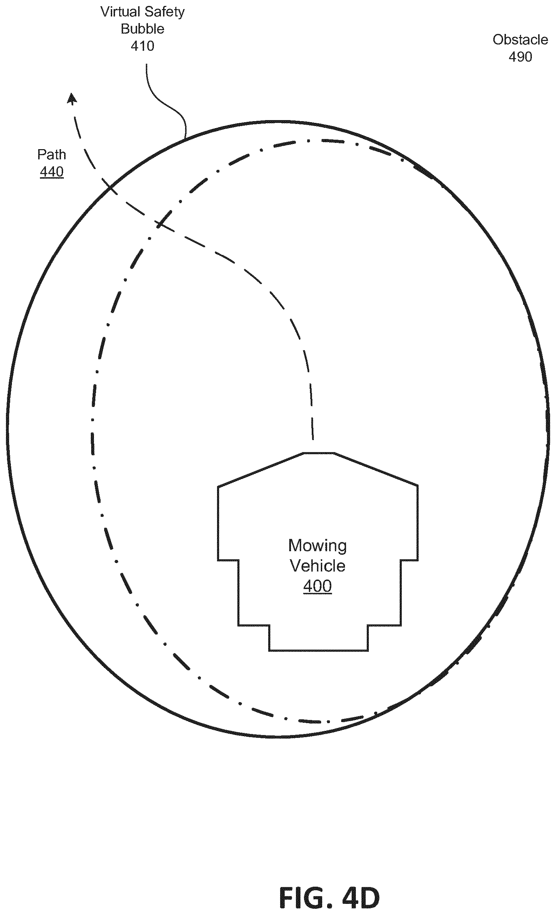

FIG. 4D illustrates dynamically modifying a virtual safety bubble around the mowing vehicle 400 based on the mowing vehicle's planned path, in accordance with one or more embodiments. In the embodiment, the mowing vehicle 400 is planned to traverse towards the left. Based on the planned path 440, the mowing vehicle 400 may modify the virtual safety bubble 410 to account for the mowing vehicle's 400 heading.

In one or more embodiments, the control system may generate a dynamic safety bubble. The dynamic safety bubble is modified based on the configuration of the mowing vehicle. For example, the control system creates a larger safety bubble for a faster moving mowing vehicle compared a smaller safety bubble for a slower moving mowing vehicle. In other examples, if visibility of the detection mechanism is limited, the control system may increase a size of the safety bubble to proceed in a safer manner. In one or more examples, if the visibility of the detection mechanism is severely hampered, the control system may increase the safety bubble to a very large size (e.g., up to an infinitely-sized bubble).

In one or more embodiments, as the mowing vehicle is actuating a landscaping mechanism, the control system may dynamically modify the safety bubble. For example, in a mowing context, the mowing vehicle may increase a size of the virtual safety bubble when the mowing deck is actuated, for mowing grass. The mowing vehicle may further account for an exit trajectory of cut plant debris. The control system may account for these positional configurations in generating the safety bubble, e.g., such that the chute positioning may affect a certain dimensionality of the safety bubble in conjunction with the direction of travel of the mowing vehicle affecting the dimensionality of the safety bubble.

In some embodiments, the control system may generate a plurality of safety bubbles for use in conjunction. Each safety bubble may be sized and/or shaped differently. The control system may further accompany different logic with each safety bubble. For example, if any obstacle breaches one particular safety bubble, the autonomous operation may be terminated or paused, whereas, for another safety bubble, an audible notification is presented by the vehicle (e.g., via a speaker) to caution those that may be in the environment around the mowing vehicle 100. In another embodiment, one safety bubble may be accompanied with logic to modify operation of the mowing vehicle 100 based on an identified object breaching the safety bubble.

In some embodiments, the control system may determine proximity of an object to a safety bubble. If the object is within a threshold proximity, the control system may enact logic to modify operation of the mowing vehicle. For example, if there's an object that is within one meter of the safety bubble, the control system may decelerate the mowing vehicle. The control system may determine the amount of deceleration based on the behavior of the object. For example, the control system may determine a velocity and/or trajectory of the object. Based on the velocity and/or the trajectory, the control system may control movement of the mowing vehicle, e.g., to prevent the object from colliding with the vehicle and/or breaching a safety bubble.

In one or more embodiments, the control system may leverage logic for performing different remedial actions in response to a breached safety bubble. In one or more embodiments, the control system may terminate autonomous operation of the mowing vehicle, e.g., by enacting control signals to decelerate any autonomous movement of the mowing vehicle to a standstill. In other embodiments, the control system may identify behavior of the object or obstacle breaching the safety bubble to enact remedial actions, e.g., enacting control signals for collision avoidance. In some embodiments, the control system may determine whether the object breaching the safety bubble has been previously permitted to breach the safety bubble. For example, in a landscaping environment with a plurality of vehicles in operation conjunctively, the control system may identify the other vehicles from the sensor data, and tag the identified vehicles with permissions for breaching the safety bubble without terminating operation. In such embodiments, the control system may enact different logic for different classes of objects identified as breaching the safety bubble. This can be advantageous, for example, when vehicles pass by one another on a common track or route.

### VII EXEMPLARY DYNAMIC SAFETY BUBBLE WORKFLOW

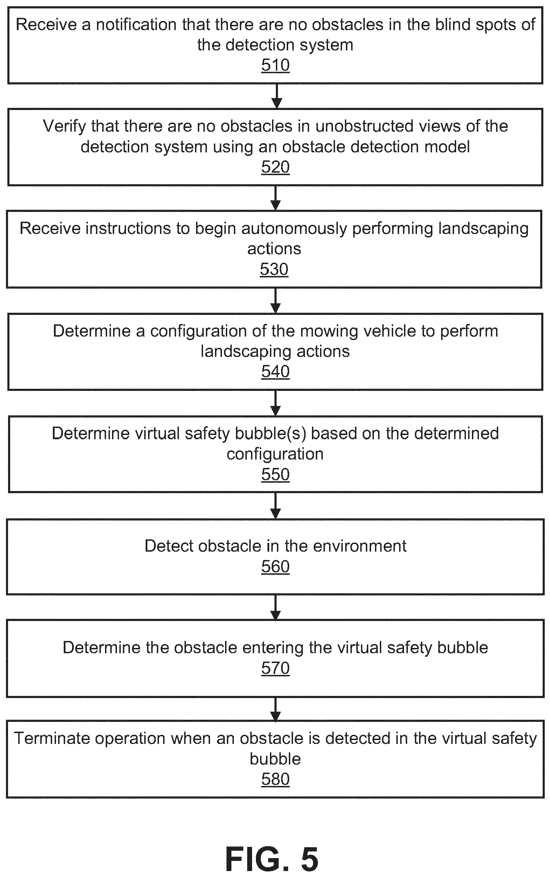

The mowing vehicle may be configured to generate a virtual safety bubble around the mowing vehicle that allows for safe, autonomous implementation of landscaping actions. FIG. 5 illustrates a process flow for generating a virtual safety bubble, according to one example embodiment. Although FIG. 5 is described from the perspective of the mowing vehicle, any component of the mowing vehicle may perform one or more of the steps (e.g., the control system or 210). In other embodiments, there may be additional or fewer steps. In other embodiments, the steps listed may occur in a different order.

To provide context, an autonomous mowing vehicle is configured with a detection system. The detection system may comprise six cameras positioned around the mowing vehicle that provide the mowing vehicle a 360-degree landscaping environment view of the environment. Within the field of view are obstructed views and unobstructed views. Obstructed views are image data within the field of view where an object in the environment obscures portions of the environment behind the object from the detection mechanism (e.g., behind a tire, or under the cab). Unobstructed views are image data within the field of view that are not obstructed.

The mowing vehicle receives a notification to begin autonomously implementing landscaping actions in the environment. In response, the mowing vehicle transmits a request to verify that the operating environment of the mowing vehicle is safe. Verification may include transmitting a notification to the manager to verify that there are no obstacles in the obstructed views of the detection system. The manager verifies that there are no obstacles and transmits a notification to the mowing vehicle reflecting the verification.

The mowing vehicle receives 510 a notification that there are no obstacles in the blind spots of the detection system. The manager may provide such notification, e.g., via a GUI running on a mobile phone application.

The mowing vehicle verifies 520 that there are no obstacles in the unobstructed views of the environment using an obstacle detection model. That is, the mowing vehicle captures one or more images of the environment using the detection system and applies an obstacle detection model to the images. The obstacle detection model analyzes the images to determine whether any of the pixels in the image represent an obstacle.

The mowing vehicle receives 530 instructions from the operator to begin autonomously performing landscaping actions in the landscaping environment. In an example configuration, the mowing vehicle may be unable to begin autonomous performance without a verification from the manager that there are no obstacles in the obstructed views and verifying (itself) that there are no obstacles in the unobstructed views.

The mowing vehicle determines 540 a configuration of the mowing vehicle to perform the prescribed landscaping actions in the environment. Determining the configuration may include accessing an implement capability, a computer model of the mowing vehicle, types of landscaping actions, and implementation characteristics defining how the mowing vehicle implements the landscaping actions (e.g., speed, path, etc.).

The mowing vehicle determines 550 a virtual safety bubble based on the determined configuration. The virtual safety bubble represents an area surrounding the mowing vehicle where, if an obstacle is detected in the area, the mowing vehicle will cease operation. The virtual safety bubble may be a distance, a time, a depth, a relative position, or any other measure of a virtual safety bubble.

The mowing vehicle detects 560 an obstacle in the environment based on applying the obstacle detection model to the images captured by the detection system. As the mowing vehicle performs landscaping actions in the landscaping environment the detection mechanism continuously captures images of the environment. Moreover, the mowing vehicle continuously applies the obstacle detection model to the captured images to identify obstacles in the environment.

The mowing vehicle determines 570 that an obstacle is within the virtual safety bubble. The mowing vehicle may determine that the obstacle has breached the virtual safety bubble if a depth of the obstacle is at or below the virtual safety bubble. The depth may be determined via a detection and ranging sensor, or a depth estimation model applied to the images.

In response to determining that an obstacle is in the virtual safety bubble, the mowing vehicle terminates 560 operation. That is, the mowing vehicle stops implementing the landscaping actions in the landscaping environment. In other embodiments, the mowing vehicle may enact other preventive measures in response to detecting an obstacle having breached the virtual safety bubble.

### VIII. EXAMPLE INTERACTIONS WITH MANAGER

As described above the mowing vehicle may interact with a manager when performing landscaping actions in the landscaping environment. Some of these interactions may be keyed to when the mowing vehicle detects an object in its virtual safety bubble. Once detected, the mowing vehicle may transmit to, or receive information from, a manager of the mowing vehicle. The mowing vehicle may also transmit and receive information when establishing a virtual safety bubble around the mowing vehicle. FIGs. 6-10 illustrate various examples of a client device interacting with a mowing vehicle.

FIG. 6 illustrates a verification process of the detection systems of the mowing vehicle. The verification process may include verifying that there are no obstacles visible in obstructed views of the mowing vehicle. On the left panel, the GUI illustrates the mowing vehicle and implement with six zones where the cameras are positioned and directed. The GUI prompts the manager to "walk around the machine to validate the cameras." As the manager physically walks around the mowing vehicle, each of the detection mechanisms (e.g., cameras) may capture data that is used by the mowing vehicle to validate the detection mechanisms' ability to detect the manager. The right panel shows a completed walk-around with checkmarks next to each detection mechanism (e.g., camera).

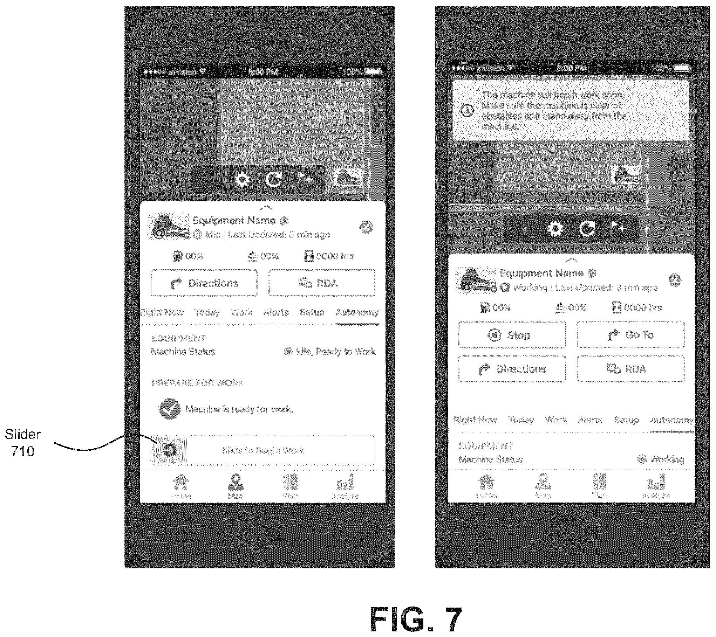

FIG. 7 illustrates a notification that the mowing vehicle is establishing the virtual safety bubble. That is, once implemented, the virtual safety bubble will be maintained according to the methods described above. So, if a human or object enters the virtual safety bubble the mowing vehicle may take corresponding actions as outlined above. The left panel shows a slider 710 that allows for a manager to engage the mowing vehicle in the landscaping actions. Sliding the slider 710 to the right is an embodiment of step 530 in FIG. 5 of providing and receiving instructions to begin autonomously performing landscaping actions.

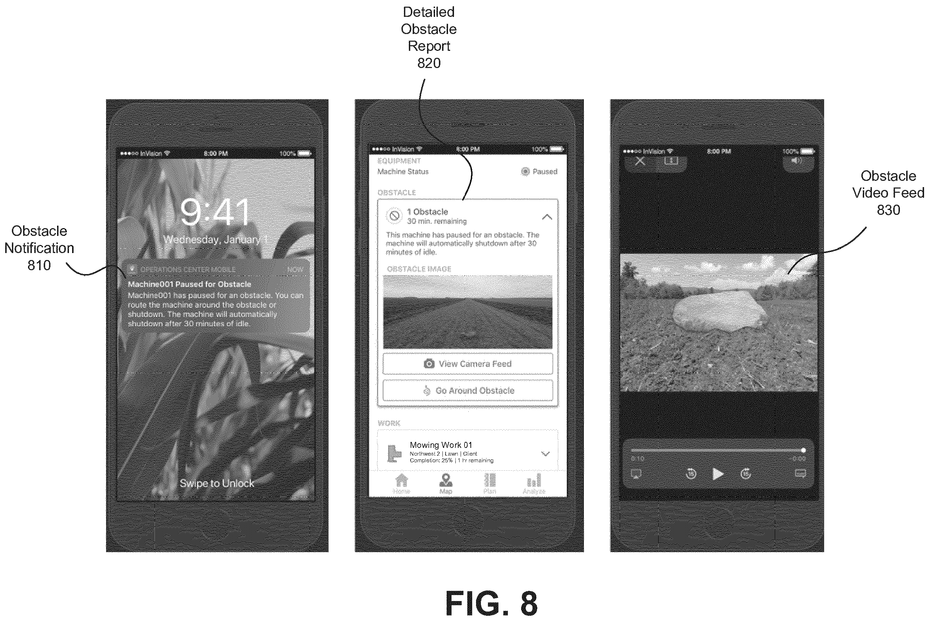

FIG. 8 illustrates a notification transmitted to a client device regarding a detected obstacle. The notification may occur when the object is detected within the virtual safety bubble. The notification may include characteristics describing the detected object. On the left panel, an obstacle notification 810 is shown as a pop-up notification on a mobile device. Upon receiving a click from the manager, the mobile application can expand to provide a detailed obstacle report 820, shown in the middle panel, providing additional details on the detected obstacle. The detailed obstacle report 820 may include an option to access an obstacle video feed 830 captured by a detection mechanism, shown in the right panel. The detailed obstacle report 820 can further include preventive measures that can be undertaken by the mowing vehicle.

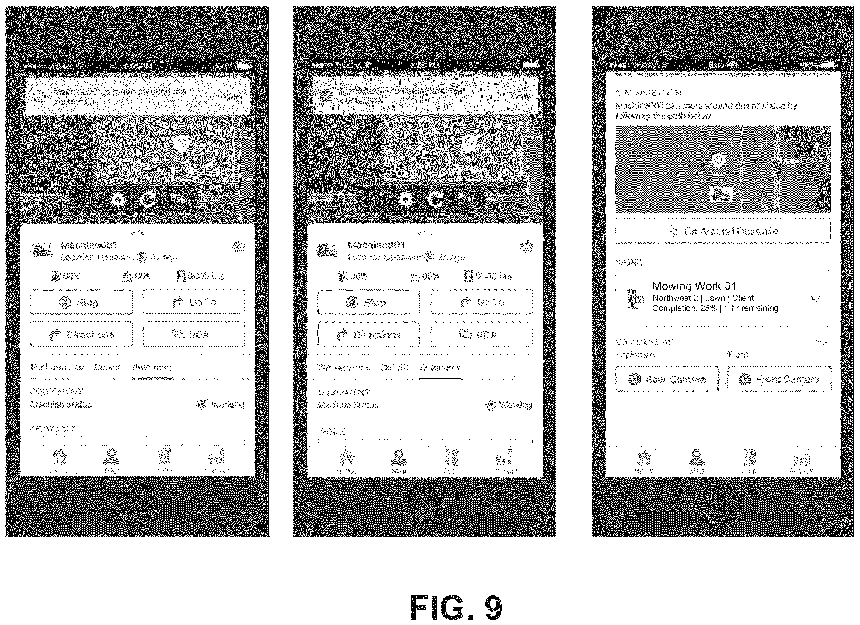

FIG. 9 illustrates actions the mowing vehicle may implement when detecting an object in the virtual safety bubble. For example, the mowing vehicle may route around the object in the landscaping environment. The GUI can illustrate a route around the obstacle and progress of the mowing vehicle in navigating the route, shown in the left panel. Upon completion of the route, the GUI can notify the manager of successful routing around the obstacle, shown in the middle panel. The right panel illustrates another example screenshot that illustrates an alternative route around an obstacle with an actionable option to instruct the mowing vehicle to enact the prevent measure of navigating around the obstacle.

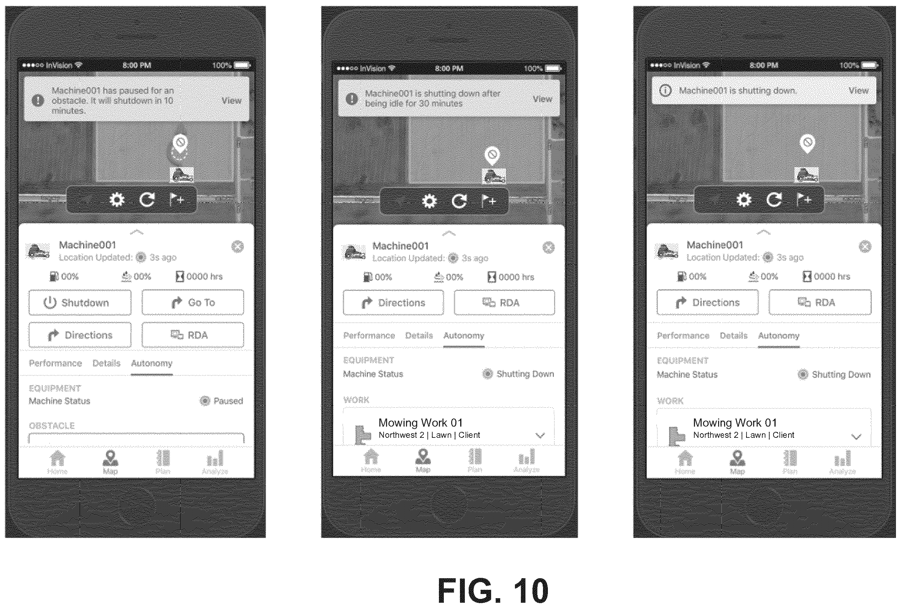

FIG. 10 illustrates actions the mowing vehicle may implement when detecting an object in the virtual safety bubble. For example, the mowing vehicle may cease operation in the landscaping environment. In the left panel, the GUI illustrates that the mowing vehicle has ceased operations (paused) in response to detection of an obstacle. In the middle panel, the GUI indicates the mowing vehicle is shutting down after being "idle for 30 minutes" after having paused due to detecting the obstacle. In the right panel, the GUI indicates that the mowing vehicle is "shutting down," e.g., switching to an inactive state.

### IX. EXEMPLARY NAVIGATIONAL WORKFLOW

FIG. 11 illustrates a navigational workflow 1100 of mowing vehicle, in accordance with one or more embodiments. The mowing vehicle may implement the control system 210 as described in FIG. 2. In other embodiments, the navigational workflow 1100 may include additional steps, fewer steps, steps in a different order, or some combination thereof. Although the following description is in the perspective of the control system 210, the mowing vehicle at large may also perform the navigational workflow (e.g., via distributed systems in contrast to one control system).

The control system 210 begins by detecting objects in an operating environment of the mowing vehicle. The control system 210 utilizes a spatial engine 1105 that generates an occupancy grid 1110. The occupancy grid 1110 is a virtual representation of the spatial environment of the mowing vehicle. The control system 210 may further utilize a route engine 1120 that generates an active path 1125 for the mowing vehicle to travel on. The controls system 210 may further receive GPS coordinates 1130, e.g., from a GPS receiver. The control system 210 performs passive mapping 1115, detecting objects 1135 in the environment of the mowing vehicle. The control system 210 performs object tracking 1140, e.g., by constantly updating a position of an object relative to the mowing vehicle within the occupancy grid 1110.

In one or more embodiments, the control system 210 may utilize object tracking 1140 to determine whether an object may have entered a blind spot. The control system 210 may track an object present in a plurality of images. Upon determining that the object has disappeared from view, i.e., no longer present in any of the images, the control system 210 may determine the object to have entered a blind spot. In other embodiments, the control system 210, knowing that an object is likely in a blind spot, may prompt a user to verify whether the object has been cleared or remains in the blind spot. In response to the user providing an input indicating the object has been cleared, then the control system 210 may continue 1185 operation. In response to the user providing an input indicating that the object remains in the blind spot, the control system 210 may reroute. The control system 210 may request further input from the manager via step 1155.

The control system 210 detects an obstacle on the active path 1145. As noted, the control system 210 may utilize a virtual safety bubble to detect when obstacles have breached the virtual safety bubble. In response to detecting the obstacle has breached the virtual safety bubble, the controls system 210 stops 1150 operations (or enact other preventive measures). The control system 210 notifies 1155 the manager of the obstacle in path (e.g., as shown in FIGs. 6-10). The control system 210 receives 1160 input from the manager, e.g., to approve 1165 of the object, i.e., to override object as not an obstacle, allowing for continued operation 1185. Otherwise, the manager may provide input to reroute 1175. In response, the control system 210 may reroute path 1180 around the obstacle. Once cleared, the controls system 210 can continue 1185 landscaping actions.

In one or more embodiments, the control system 210 can routinely update bounding boxes of the objects. The control system 210 can routinely evaluate whether a bounding box for an object is accurately defined for the object. If not accurately defined, the control system 210 may implement Verification Service 1194 to produce corrected bounding boxes 1196 for the various objects. Having accurate bounding boxes increases detect precision, i.e., when detecting the object breaches the virtual safety bubble.

### X. EXAMPLE NAVIGATIONAL SCENARIOS

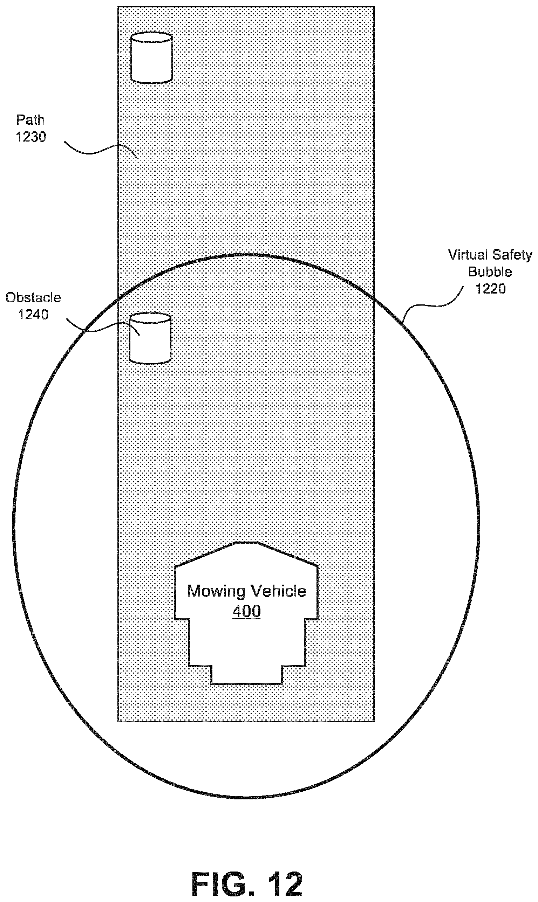

FIG. 12 illustrates navigation of a mowing vehicle 1210 on-path on a straight path 1230, in accordance with one or more embodiments. The mowing vehicle 1210 is an embodiment of the mowing vehicle 100 comprising the control system 210. The mowing vehicle 1210 generates the virtual safety bubble 1220 to aid navigation of the mowing vehicle 1210. As the mowing vehicle 1210 is driving on the path 1230 and encounters an obstacle 1240 (i.e., the obstacle 1240 breaches the virtual safety bubble 1220), then the mowing vehicle 1210 may cease operations and/or enact other preventive measures.

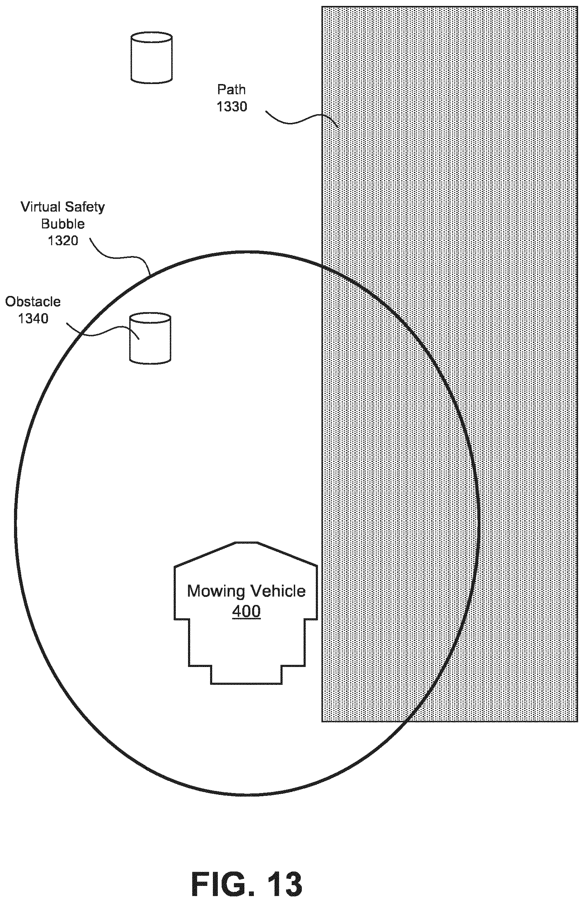

FIG. 13 illustrates navigation of a mowing vehicle 1310 off-path on a straight path 1330, in accordance with one or more embodiments. The mowing vehicle 1310 is an embodiment of the mowing vehicle 100 comprising the control system 210. The mowing vehicle 1310 generates the virtual safety bubble 1320 to aid navigation of the mowing vehicle 1310. In this scenario, the mowing vehicle 1310 is significantly off-path. If the mowing vehicle 1310 determines that it is off-path, then the mowing vehicle 1310 may generate course-correction navigation instructions to route the mowing vehicle 1310 back onto the path 1330. The mowing vehicle 1310 may also cease operations and/or provide a notification to a manager indicating that the mowing vehicle 1310 is off-path, requesting subsequent instructions. Even when off-path, if the mowing vehicle 1310 encounters an obstacle 1340 (i.e., the obstacle 1340 breaches the virtual safety bubble 1320), then the mowing vehicle 1310 may cease operations and/or enact other preventive measures.

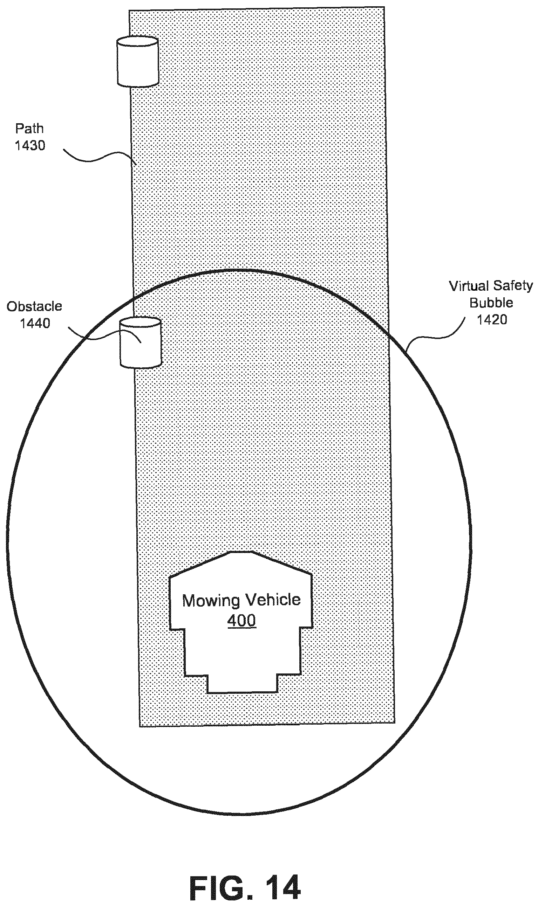

FIG. 14 illustrates navigation of a mowing vehicle 1410 on-path and off-center of a straight path 1430, in accordance with one or more embodiments. The mowing vehicle 1410 is an embodiment of the mowing vehicle 100 comprising the control system 210. The mowing vehicle 1410 generates the virtual safety bubble 1420 to aid navigation of the mowing vehicle 1410. In this scenario, the mowing vehicle 1410 is on-path but off-center. If the mowing vehicle 1410 determines that it is off-center, then the mowing vehicle 1410 may generate course-correction navigation instructions to route the mowing vehicle 1410 back onto the center of the path 1430. Even when off-path, if the mowing vehicle 1410 encounters an obstacle 1440 (i.e., the obstacle 1340 breaches the virtual safety bubble 1420), then the mowing vehicle 1410 may cease operations and/or enact other preventive measures.

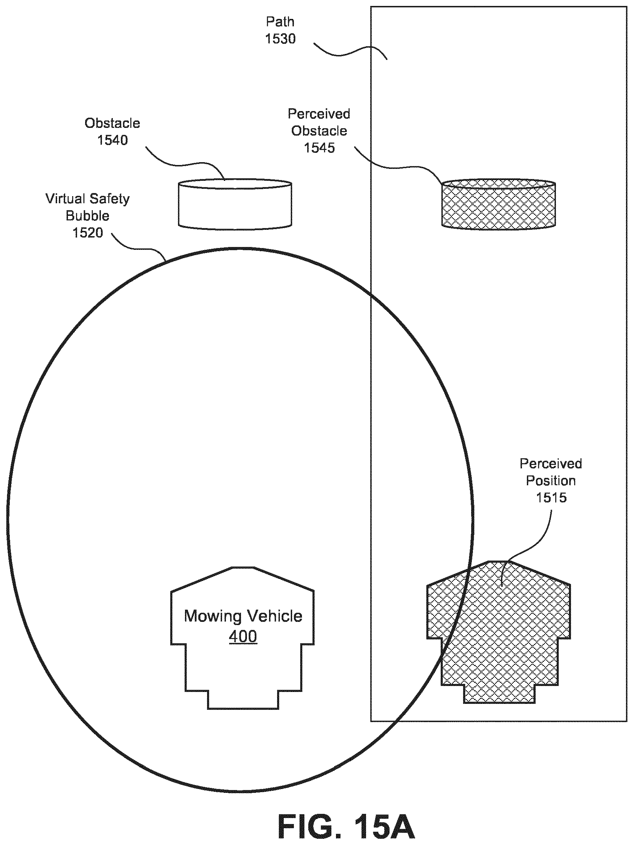

FIG. 15A illustrates navigation of a mowing vehicle 1510 when off-path but perceived to be on-path, in accordance with one or more embodiments. The mowing vehicle 1510 is an embodiment of the mowing vehicle 100 comprising the control system 210. The mowing vehicle 1510 may receive GPS coordinates such that a perceived position 1515 of the mowing vehicle 1510 is on-path, i.e., on the path 1530. However, in fact, the mowing vehicle 1510 is off-path. The mowing vehicle 1510 utilizes the virtual safety bubble 1520, but will only enact preventive measures when the obstacle 1540 (which is off-path) enters the virtual safety bubble 1520. Obstacles that are on the actual path 1530 may not breach the virtual safety bubble 1520, such that the mowing vehicle will continue operations. In some embodiments, the mowing vehicle 1510 may received corrected GPS coordinates locating the mowing vehicle 1510 off-path, although previously perceived to be on-path, at which point, the mowing vehicle 1510 may generate and enact course-correction navigation to navigate the mowing vehicle 1510 back onto the path 1530.

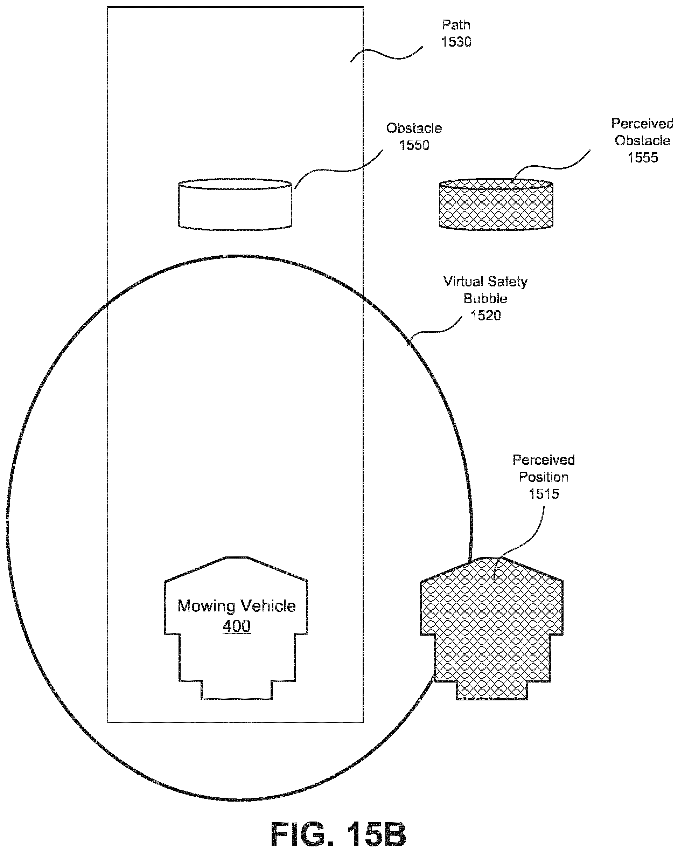

FIG. 15B illustrates navigation of a mowing vehicle 1510 when on-path but perceived to be off-path, in accordance with one or more embodiments. This scenario is a converse to the scenario in FIG. 15A. If the mowing vehicle 1510 encounters obstacle 1550 on the path 1530, though perceived to be off-path, e.g., perceived obstacle 1555 is not on the path 1530, the mowing vehicle 1510 will enact preventive measures.

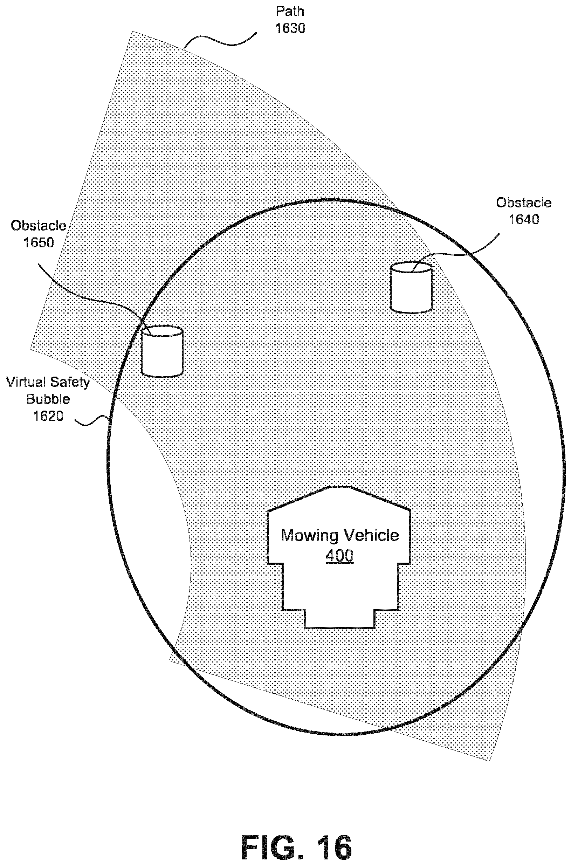

FIG. 16 illustrates navigation of a mowing vehicle 1610 when on-turn on a curved path 1630, in accordance with one or more embodiments. On-turn refers to the control system's perceived turning curvature matching to the target turning curvature to remain on the curved path 1630 when performing the turn. Off-turn refers to the control system's perceived turning curvature rotationally offset from the target turning curvature to remain on the curved path 1630. The mowing vehicle 1610 is an embodiment of the mowing vehicle 100 comprising the control system 210. When on a curved path 1630, the mowing vehicle 1610 may adjust the virtual safety bubble 1620 to account for the turning radius of the mowing vehicle 1610. For example, the virtual safety bubble 1620 may be extended in a turning direction of the mowing vehicle 1610. When the mowing vehicle 1610 detects one or more obstacles 1640 and 1650 are within the virtual safety bubble 1620, the mowing vehicle 1610 can enact preventive measures.

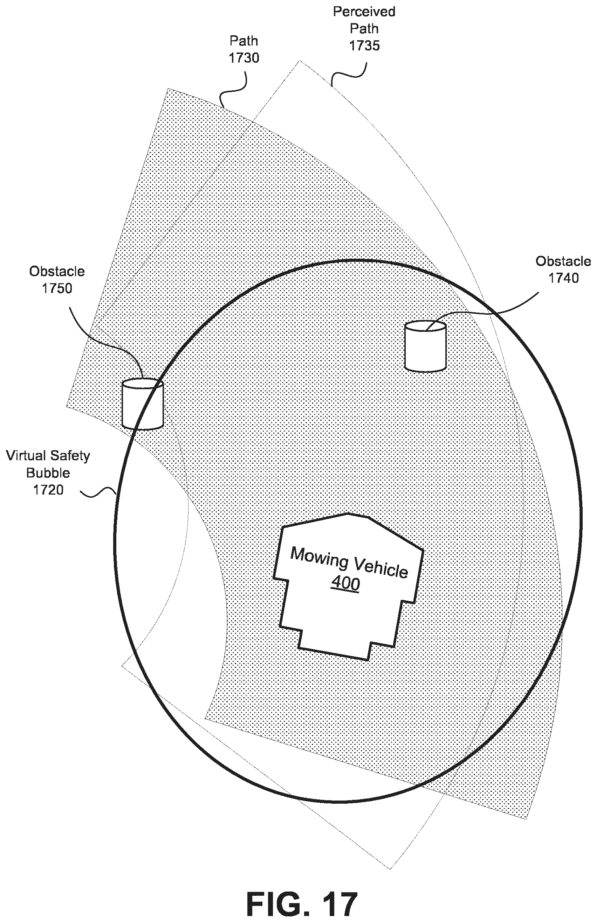

FIG. 17 illustrates navigation of a mowing vehicle when off-turn on a curved path 1730, in accordance with one or more embodiments. The mowing vehicle 1710 is an embodiment of the mowing vehicle 100 comprising the control system 210. The mowing vehicle 1710 may have a perceived orientation that is skewed from the actual orientation. In such scenario, the mowing vehicle 1710 is traveling along a perceived curved path 1735 that is offset from the curved path 1730. The mowing vehicle 1710 may enact course-correction navigation to align the mowing vehicle's 1710 orientation, i.e., to align the perceived path 1735 to the actual path 1730. In one or more embodiments, the mowing vehicle 1710 can utilize the detection mechanisms to locate obstacles 1740 and 1750 on the path 1730 as markers on the path 1730.

### XI. EXAMPLE MOWING SAFETY BUBBLE WORKFLOW

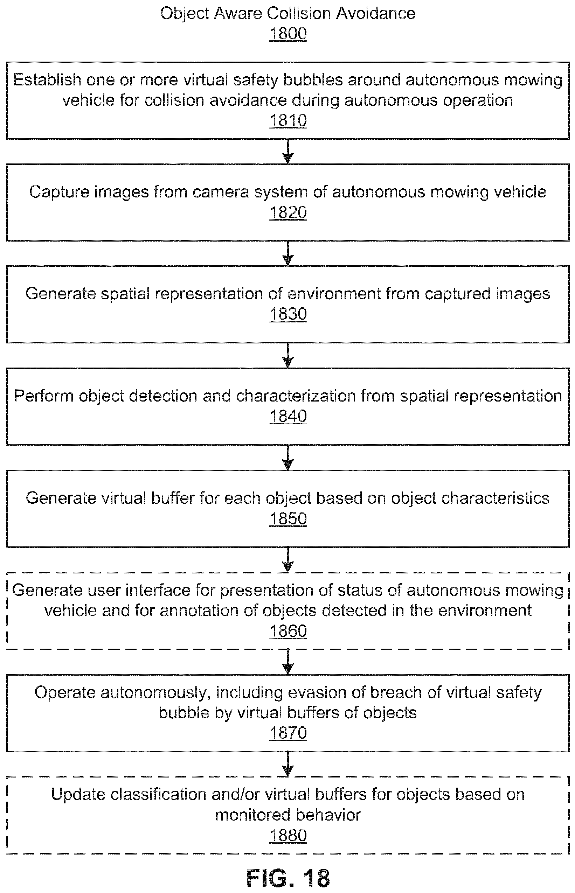

FIG. 18 illustrates a process flowchart describing object aware collision avoidance 1800 by an autonomous mowing vehicle, according to one or more embodiments. A control system for an autonomous mowing vehicle (e.g., the control system 210 of FIG. 2) may perform the object aware collision avoidance 1800 in conjunction with other components of the autonomous mowing vehicle. In other embodiments, one or more steps may be performed by other systems or devices in conjunction with the autonomous mowing vehicle.

The autonomous mowing vehicle establishes 1810 one or more virtual safety bubbles around the autonomous mowing vehicle for collision avoidance during autonomous operation. In some embodiments, establishment of the virtual safety bubble(s) includes determining a configuration of the autonomous mowing vehicle. The configuration or the autonomous mowing vehicle may be set according to a planned field operation. The planned field operation may include a series of actions to be performed by the autonomous mowing vehicle, e.g., one action may be traversing an environment to a landscaping site, another action may be mowing the landscaping site, etc. For each action, the control system may configure the autonomous mowing vehicle distinctly, to perform such action. For example, in traversing an environment, the control system may identify an optimal pathway or route to traverse the environment. In another example, in mowing the landscaping site, the control system may identify an optimal pathway for efficiently mowing the landscaping site, i.e., minimizing redundant passes over mowed areas. The control system may establish different sets of one or more safety bubbles for each configuration. For example, in the landscape traversal, the control system may leverage at least one virtual safety bubble to avoid collision with objects in the environment. In another example, while performing the mowing action, the control system may leverage multiple safety bubbles, with one safety bubble for warning any individuals within the safety bubble, and with another safety bubble for terminating operation of the mowing deck. Other factors affecting virtual safety bubble generation are described throughout this disclosure.

In one or more embodiments, establishment of the virtual safety bubbles may further leverage a human operator to initiate autonomy. In one or more embodiments, the autonomous mowing vehicle may include a platform for a human operator to stand on the vehicle. The vehicle may include controls for operating in a manual configuration, i.e., with the human operator controlling operation from the platform, or an autonomous configuration, i.e., without need of the human operator controlling the vehicle from the platform. In some embodiments, to start autonomy, the human operator may initiate autonomy from on-vehicle controls. Once initiated, the vehicle may provide use a timer for the human operator to move beyond the one or more established safety bubbles prior to beginning operations. In other embodiments, to start autonomy, the human operator may initiate autonomy via a client device in communication with the autonomous mowing vehicle. In response to receiving a signal from the client device to initiate autonomy, the autonomous mowing vehicle may establish the one or more safety bubbles and assess whether any object is within the established safety bubbles prior to beginning operation.

In one or more embodiments, during autonomous startup, the autonomous mowing vehicle may monitor a position of the operator during an activation timer. In such embodiments, the operator may engage a switch or control on the autonomous mowing vehicle to engage in the autonomous mode. Once engaged, the operator moves away to clear the one or more established virtual safety bubbles. If the operator fails to move out of the one or more virtual safety bubbles, i.e., the operator's position remains within the one or more virtual safety bubbles, depending on which bubble is in breach, the autonomous mowing vehicle may enact remedial actions to effect movement of the operator to clear the breach. If the operator does not move out of the virtual safety bubble before expiration of the activation timer, then the autonomous mowing vehicle fails to startup autonomous operation. If the operator clears the virtual safety bubble before expiration, then the autonomous mowing vehicle can startup autonomous operation. In some embodiments, the autonomous mowing vehicle may startup autonomous operation upon determining that the operator is clear of an inner bubble configured for actuation of a landscaping mechanism, though the operator is within an outer bubble configured for warning bystanders.

The autonomous mowing vehicle captures 1820 images from a camera system mounted on the autonomous mowing vehicle. The camera system captures images in view of an environment surrounding the autonomous mowing vehicle. In one or more embodiments, the camera system may include stereoscopic pairs of cameras, e.g., one pair of cameras facing forward, one pair of cameras facing backward, one pair of cameras facing left, one pair of cameras facing right (as shown in FIG. 3). Adjacent pairs of cameras may have overlapping fields of view, providing a full 360-degree panoramic view of the environment surrounding the autonomous mowing vehicle. With the captured image data, the control system may perform one or more image analyses to identify features from the image data. For example, the control system may apply a depth estimation model to the image data to predict depth for one or more images of the image data. In another example, the control system may apply a semantic segmentation model to classify pixels as one of a plurality of semantic labels (e.g., ground, sky, foliage, obstacle, etc.). In another example, the control system may apply a visual odometry algorithm to the captured image data to determine a velocity and/or an acceleration of the object.

In some embodiments, the autonomous mowing vehicle may capture additional sensor data from one or more sensors implemented on the vehicle. For example, the autonomous mowing vehicle may include one or more ranging and detection sensors (e.g., light detection and ranging (LiDAR), radio detection and ranging (RADAR), etc.) for measuring depth information of objects in the environment. In embodiments with depth data, the control system may fuse depth data from disparate sources to form more precise measurements. For example, the control system may fuse depth information determined from captured image data with depth information from LiDAR data. The fusing process may take into account a weighted average of the depth measurements from the two sources.

The autonomous mowing vehicle generates 1830 a spatial representation of the environment from the captured images. The autonomous mowing vehicle may generate a three-dimensional spatial representation of objects in the environment. The autonomous mowing vehicle may project pixels from the captured images into the 3D space based on depth information (e.g., determined by the captured images or by LiDAR data). The autonomous mowing vehicle may group points together to identify various objects in the environment. For example, objects may be identified via an object detection algorithm applied to the captured image data. The pixels are grouped together and tagged as component to one object. The points projected from the grouped pixels can also be grouped in the spatial representation to form the object in the spatial representation. In one or more embodiments, the autonomous mowing vehicle may combine one or more polygons to form the bounding shape of the object in the spatial representation.

The autonomous mowing vehicle performs 1840 object detection and characterization from the spatial representation. The autonomous mowing vehicle may leverage one or more image-based models to detect and characterize the objects. For example, a machine-learning model may be employed to classify each object identified in the spatial representation. Classes of objects may be broad categories (e.g., person, vehicle, animal, inanimate object, etc.). One or more classes may have subcategories. For example, persons can be sub-divided into roles such as bystander or operator. In another example, vehicles can be sub-divided into different types, e.g., self-propelled, motorized, large, small, etc. The model may further identify specific instances, e.g., Person A is identified in the environment, Vehicle B is identified, etc. The one or more models may further determine characteristics of the objects, e.g., velocity, speed, trajectory, acceleration/deceleration, dimension(s), color, awareness (assuming an animate object such as a person or an animal), behavior, proximity, etc. The models may use image data, the spatial representation, other sensor data, or some combination thereof as input.

The autonomous mowing vehicle generates 1850 a virtual buffer for each object based on the object characteristics. The autonomous mowing vehicle may determine a dimensionality of the virtual buffer based on the object characteristics. For example, the virtual buffer can be large, medium, or small in size. The large buffer, for example, can be four times the object's dimensionality. The medium buffer, for example, can be three times the object's dimensionality. The small buffer, for example, can be two times the object's dimensionality. Any number of buffer sizes or dimensionalities can be implemented. Sizing of the virtual buffers may also be determined based on a size of the vehicle, e.g., a larger vehicle has a longer stopping distance, such that the virtual buffer is sized larger than it would be for a smaller vehicle

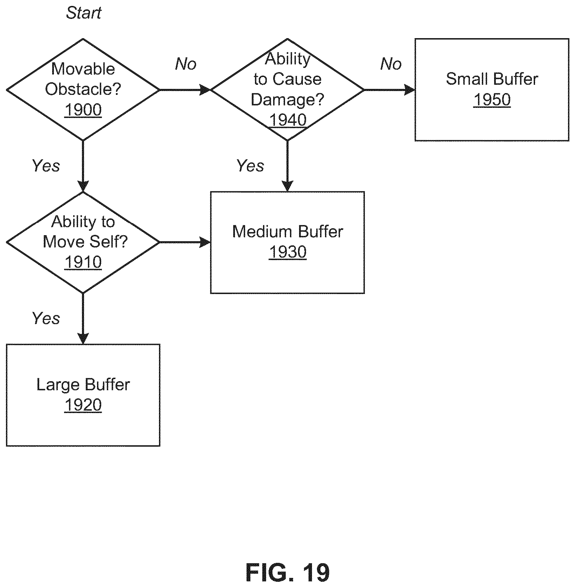

FIG. 19 illustrates one example decision tree of determining a size of the virtual buffer based on the object's characteristics. At an initial evaluation, the autonomous mowing vehicle determines 1900 whether the object is a moving obstacle. If so, the autonomous mowing vehicle determines 1910 whether the object has the ability to move itself. If so, the autonomous mowing vehicle may determine 1920 the object needs a large buffer (e.g., persons or animals). If the autonomous mowing vehicle determines that the object cannot move itself, the autonomous mowing vehicle determines 1930 a medium buffer for the object (e.g., vehicle). If the autonomous mowing vehicle determines that the object cannot move, the autonomous mowing vehicle determines 1940 whether the object has the ability to cause damage to surrounding objects. If so, the autonomous mowing vehicle determines 1930 a medium buffer for the object. If not, the autonomous mowing vehicle determines 1950 a small buffer for the object. In some embodiments, dimensionality of each size of buffer is objective. For example, the large buffer is a 2-meter radius around the object. In other embodiments, dimensionality may be dependent on dimensionality of the object, e.g., the large buffer is four times the size of the object. Such that an object that has a 1-meter by 1-meter footprint, may have a large buffer that has a 4-meters by 4-meters footprint, centered around the object.

Returning to FIG. 18, in one or more embodiments, the autonomous mowing vehicle may generate 1860 a user interface for presentation of status of the autonomous mowing vehicle and for annotation of objects detected in the environment. The user interface may render the spatial representation of the environment surrounding the autonomous mowing vehicle inclusive of the objects identified from the environment. The user interface may provide a dynamic real-time feed to an operator's client device, providing the operator real-time insight into the operation of the autonomous mowing vehicle. The user interface may further annotate objects in the environment based on analyses by the autonomous mowing vehicle. For example, the objects may be annotated based on their classifications (e.g., person, animal, vehicle, etc.). The user interface may further display the virtual buffer generated for each object (e.g., small buffer, medium buffer, large buffer, etc.). The user interface may annotate the object with other characteristics, e.g., speed, velocity, awareness, behavior, etc.

The autonomous mowing vehicle operates 1870 autonomously, including evasion of breach of virtual safety bubble by virtual buffers of any objects in the operating environment. The autonomous mowing vehicle may perform landscaping operations, may traverse the environment, etc., based on a landscaping plan planned for the autonomous mowing vehicle. The autonomous mowing vehicle continues autonomous operation with care to evade the breach of the virtual safety bubble of the autonomous mowing vehicle. Evasion of breach of the virtual safety bubble(s) entails avoiding collision of any object's virtual buffer with the virtual safety bubble(s). The vehicle may project a trajectory of the vehicle and/or a trajectory of the object to detect a potential collision, should the vehicle and/or the object continue in their respective trajectories. The vehicle may further incorporate some tolerance in the evasive procedure, e.g., tacking action to prevent the virtual buffer of an object from coming within a threshold distance (e.g., 1 meter) of the virtual safety bubble. In some embodiments, the autonomous mowing vehicle may perform on-the-fly remedial action(s) to evade the breach. For example, the autonomous mowing vehicle may determine a safe alternative route to navigate the autonomous mowing vehicle to evade an object. In another example, the autonomous mowing vehicle may leverage notifications or other warnings to effect change in the object's behavior. In one or more examples, the autonomous mowing vehicle may modify operation or terminate autonomy. Other actions may be performed in conjunction with the virtual safety bubble and virtual buffers for the objects.

In one or more example implementations, the autonomous mowing vehicle may perform object evasion based on operating mode of the autonomous mowing vehicle, a classification of an object in the vicinity, a characterization of the object in the vicinity, or some combination thereof. The operating mode of the autonomous mowing vehicle may include, for example, a stationary mode (i.e., the autonomous mowing vehicle is at a standstill with no mechanisms actively engaged), a transit mode (i.e., the autonomous mowing vehicle is in motion but with no mechanisms actively engaged), a landscaping mode (i.e., the autonomous mowing vehicle is in motion and at least one mechanism is actively engaged in performing a landscaping action), and autonomous startup or shutdown. The classification of objects may include a person, a vehicle, an operator, an animal, an inanimate object, etc. Persons may be separately classified into specific roles, e.g., operator, bystander, etc. For example, the characterization of objects may include a behavior of the object. In one or more examples, the behavior of an animate object (e.g., a person, an animal, or a vehicle in control by a person) may include a curious state (i.e., object is aware of the autonomous mowing vehicle and onlooking), an oblivious state (i.e., object is unaware of the autonomous mowing vehicle), an evasive state (i.e., object is evading the autonomous mowing vehicle), an aggressive state (i.e., object is approaching the autonomous mowing vehicle), and a trained state (i.e., an operator is aware of the autonomous mowing vehicle and engages with the autonomous mowing vehicle).

The autonomous mowing vehicle may classify behavior of the person based on their movement in relation to the autonomous mowing vehicle. For example, a person that breaches an outer virtual safety bubble, then moves away from the autonomous mowing vehicle can be classified as in the evasive state. With persons, the autonomous mowing vehicle may operate with heightened sensitivity. For example, the autonomous mowing vehicle may increase a sizing of a virtual safety bubble that triggers termination of autonomous operation with a person compared to a non-human object.

In one or more embodiments, the autonomous mowing vehicle can generate an outer virtual safety bubble for triggering warnings to cause animate objects to distance from the vehicle. The outer virtual safety bubble may be the largest-sized virtual safety bubble. Upon breach, the vehicle can trigger warnings (including an audio cue by a speaker and/or a visual cue by a light system). The vehicle can also initiate a timer. If the object does not clear the outer virtual safety bubble, the vehicle can terminate operation or can terminate actuation of a landscaping mechanism, which may have been actuated at the time of breach.

In one or more embodiments, the autonomous mowing vehicle can generate an inner virtual safety bubble, e.g., when the landscaping mechanism is actuated. The inner virtual safety bubble may be used in conjunction with one or more other virtual safety bubbles. Upon breach by the virtual buffer of any object, the autonomous mowing vehicle can terminate actuation of the landscaping mechanism.

In one or more embodiments, to evade breach of the virtual safety bubbles by the virtual buffer of any object, the autonomous mowing vehicle may modify configuration of the autonomous mowing vehicle. For example, the vehicle can detect a trajectory of the vehicle and, optionally, a trajectory of the object (for a moving object). The vehicle can determine a potential collision based on the trajectory of the vehicle and, optionally, the trajectory of the object. The vehicle can determine how to modify the configuration of the vehicle that would prevent breach, for example, decelerating, turning, etc. The vehicle modifies the configuration, thereby modifying the virtual safety bubbles. For example, decelerating the vehicle can result in shrinkage of the virtual safety bubble. As another example, terminating actuation of the landscaping mechanism can result in removal of one virtual safety bubble.

In one or more embodiments, the autonomous mowing vehicle may update 1880 classification and/or virtual buffers for objects based on monitored behavior. As the autonomous mowing vehicle operates autonomously, the autonomous mowing vehicle continues to collect data describing and reflecting the environment surrounding the autonomous mowing vehicle. In some embodiments, as the autonomous mowing vehicle performs remedial actions to evade breach, the autonomous mowing vehicle continues to monitor behavior of the objects in the environment. Based on the monitoring, the autonomous mowing vehicle may update classification of objects. For example, the autonomous mowing vehicle may increase an aggression level in behavior classification of an object based on the object's persistent movement towards the autonomous mowing vehicle. The autonomous mowing vehicle may also update the virtual buffer for an object based on the updated classification and/or characterization. Using another example, the virtual buffer may be sized down upon determining that a moving object has stopped moving.

The autonomous mowing vehicle continues to operate autonomously until certain stopping conditions are met. In one or more embodiments, the autonomous mowing vehicle may complete the landscaping plan, performing the landscaping actions included in the plan. Once complete, the autonomous mowing vehicle may terminate autonomous operation. In one or more embodiments, the autonomous mowing vehicle may terminate autonomous operation for a virtual safety bubble breach. In such examples, the autonomous mowing vehicle may transmit a notification to the operator of the breach and the terminated operation.

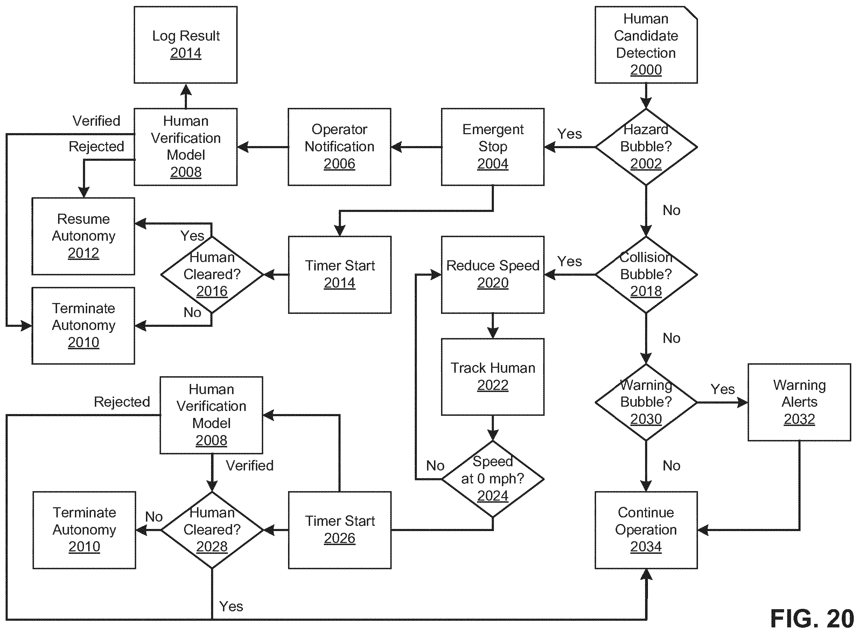

FIG. 20 illustrates a workflow for implementing virtual safety bubbles for a human detected in proximity to the mowing vehicle, in accordance with one or more embodiments.

The workflow may be enacted by a control system of a mowing vehicle leveraging three or more virtual safety bubbles. A warning bubble may be the largest bubble, for warning bystanders or other transient living things. A collision bubble may be smaller than the warning bubble and used for identifying potential collisions with the mowing vehicle. A hazard bubble may be smaller than the warning bubble (and, optionally, smaller than the collision bubble) and used for identifying potential hazards for humans.

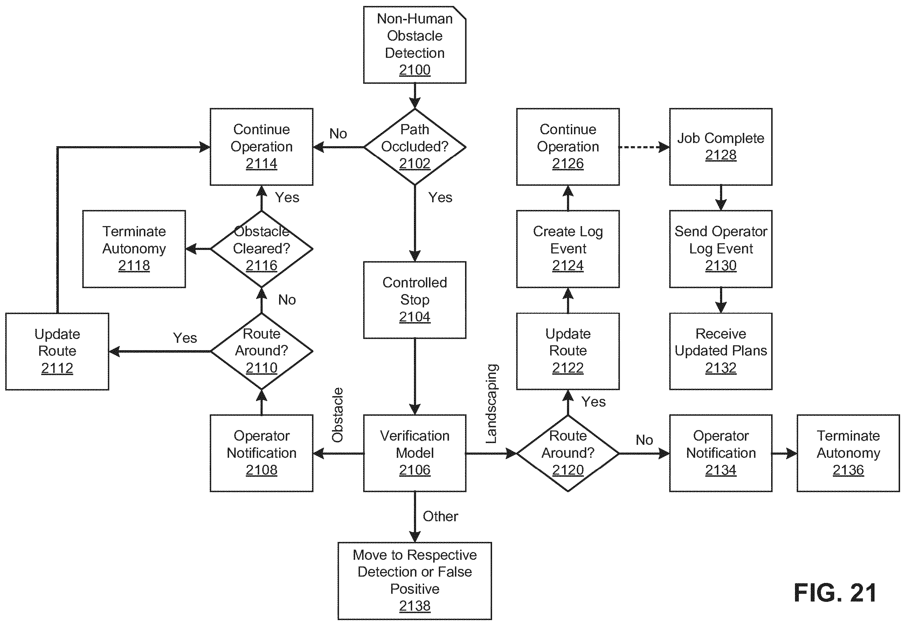

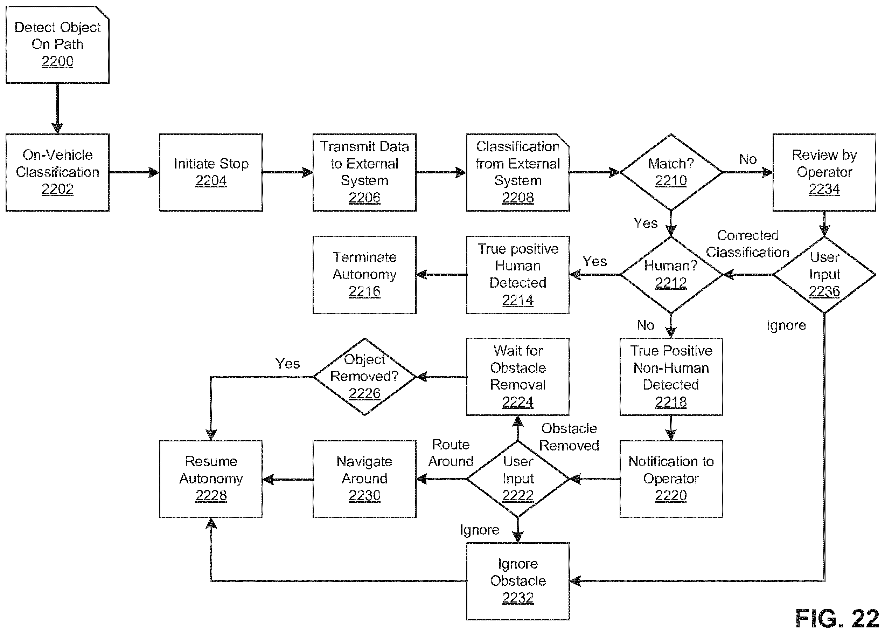

A human candidate detection 2000 is identified by sensor data by the detection mechanisms (e.g., image data from cameras). The control system determines 2002 whether the candidate human has breached the hazard bubble. If so, the control system enacts an emergent stop 2004. The control system continues to generate and transmit an operator notification 2006 of the candidate human detection. The control system may also start a timer 2014 used for restarting autonomy, assuming safety conditions are cleared. The control system implements a human verification model 2008 (further described in FIG. 22) for verifying whether the detected object is in fact a human. If the human verification model 2008 verifies the human within the hazard bubble, the control system terminates autonomy 2010. If the human verification model 2008 rejects the human classification, the control system may resume autonomy of the mowing vehicle. Results of the human verification model 2008 may be logged, e.g., for human review, or for refining models of the control system. If the model determines that the object is not human, the control system may enact a workflow for non-human objects (e.g., described in FIG. 21).

During and up to the end of the timer, the control system evaluates whether the candidate human has cleared the hazard bubble. If so, the control system may resume autonomy 2012. If not, the control system may terminate autonomy 2010.

If the control system determines that the candidate human object is not in the hazard bubble, then the control system determines 2018 whether the candidate human object is in the collision bubble. If so, the control system reduces speed 2020. The control system further tracks 2022 the candidate human object. If the speed has yet to reduced to 0 mph, the control system may further reduce speed 2024. The control system may also start another timer 2026. The control system may leverage the human verification model 2008 to verify whether the candidate human object is indeed human. If verified, the control system may assess 2028 whether the human has cleared the collision bubble. If not, the control system may terminate autonomy 2010. If at any point in the time, the candidate human object has cleared the collision bubble, the control system may continue operation 2034.

If the control system determines that the candidate human object is not in the collision bubble, then the control system determines 2030 whether the candidate human object is in the warning bubble. If so, the control system may generate warning alerts 2032 to notify the candidate human object to move away from the operating environment. The warning alerts may include any type of output perceivable by a human, e.g., audio, visual, client device notification, etc. If the candidate human object is in proximity to the warning bubble but has not yet breached the warning bubble, the control system may continue operation 2034. The warning alerts may be audio cues (e.g., by a speaker system) or visual cues (e.g., by a light system or an electronic display). In other embodiments, other warning alerts may be used, any combination of warning alerts may be used, or a tiered schema of alerts may be used.

FIG. 21 illustrates a workflow for implementing virtual safety bubble for resolution of a detected non-human obstacle in proximity to the mowing vehicle, in accordance with one or more embodiments. The workflow may be enacted by a control system of a mowing vehicle leveraging at least one virtual safety bubble. The control system may enact this workflow in detecting a static, non-human object 2100. In other embodiments, any combination of the depicted steps may be incorporated into the workflow. For example, there may be additional, fewer, or different steps than those depicted.

The control system determines 2102 whether the path is occluded by the object. If so, the control system enacts a controlled stop 2104. The control system applies the verification model 2106 to the object (i.e., to the image data of the object) to classify the object.

If the verification model 2106 determines the object to be an obstacle, the control system generates and transmits an operator notification 2108. The notification may present data on the identified obstacle. The notification may request instructions 2110 on whether to route around the obstacle. If the operator provides instructions to route around, the control system updates 2112 the route to find a safe route around the static obstacle. If the operator does not provide such instructions to route around, the control system detects 2116 whether the obstacle is cleared. If not, the control system terminates autonomy 2118. If the obstacle is cleared, the control system continues operation 2114.

If the verification model 2106 identifies the object to be landscaping, the control system determines 2120 whether the mowing vehicle can be routed around the landscaping. If so, the control system updates the route 2122. The control system creates a log of the event 2124. The control system continues operations 2126. Upon job completion 2128, the control system sends the long event to the operator 2130. The operator may then provide updated plans, which are received 2132 by the control system. If the control system determines that the landscaping cannot be routed around, the control system generates and transmits an operator notification 2134 of the obstructed path. The control system terminates autonomy 2136.

The verification model 2106 may further log results 2138 for human review. Based on the human review, the results may be used to finetune any of the models used by the control system.

FIG. 22 illustrates a workflow for human verification with a multiple concordance of human detection, in accordance with one or more embodiments. In one or more embodiments, a model implements the workflow illustrated (i.e., a human verification model). The workflow is performed by a control system (e.g., the control system 130 or the control system 210). In other embodiments, one or more steps are performed by other systems (e.g., the external system(s) 220).

The control system detects an object on path 2200. The control system performs on-vehicle classification 2202 to determine a classification of the object (e.g., human, non-human obstacle, etc.). For example, the on-vehicle classification 2202 may leverage a first type of model or algorithm for classifying the object based on collected sensor data. The control system further transmits the data to an external system 2206 for second classification. The control system receives the secondary classification from the external system 2208. The external system 2208 may employ one or more other models and/or algorithms (e.g., that may be more robustly trained than the on-vehicle model) for classifying the object.

The control system evaluates whether the on-vehicle classification matches to the secondary classification by the external system 2210. If the two classifications match, the control system evaluates whether the matched classification is the human label 2212. If the true positive human is detected by the two classifications 2214, the control system can terminate autonomy 2216. If the true positive non-human is detected by the two classifications 2218, the control system can notify the operator 2220 for follow-on instructions on how to address the obstacle. The notification may be sent to a client device in use by the operator, that is also in communication to the on-vehicle control system.

The control system receives user input 2222 on how to address the obstacle. The user input may indicate that the obstacle will be removed. The control system waits for the obstacle removal 2224. The control system can capture additional sensor data to evaluate whether the object is removed 2226. If so, then the control system can resume autonomy 2228. The user input may, alternatively, indicate that the vehicle should route around the obstacle. Based on this input, the control system navigates around 2230 the obstacle. Navigating around the obstacle may include determining a clear route around the obstacle, that resumes the vehicle path. The control system executes the updated navigation to route the vehicle around the obstacle. Upon the route around, the control system resumes autonomy 2228. The user input may, alternatively, indicate that the vehicle should ignore the obstacle 2232, e.g., the obstacle is too small, the obstacle was a false positive detection, etc. The control system resumes autonomy 2228. The control system may further leverage the operator's override classification as a feedback training example. The control system (or an external system) may retrain the object classification model based on the operator's corrected classification. The control system may further update a map of the environment to reflect the detected obstacle and its classification.

If the two classifications (the on-vehicle classification, and the external system classification) are mismatched, the control system transmits the data to the operator's client device for review by the operator 2234. The data may include images of the object detected on the path. The operator provides user input 2236 on the classification. The control system may receive a corrected classification from the operator, overriding the other two classifications. The control system then picks up at evaluating whether the classification is a human 2212. Otherwise, the control system may receive input to ignore the classification, such that the control system ignores the obstacle 2232, and resumes autonomy 2228.

### XII. EXAMPLE COMPUTING SYSTEM

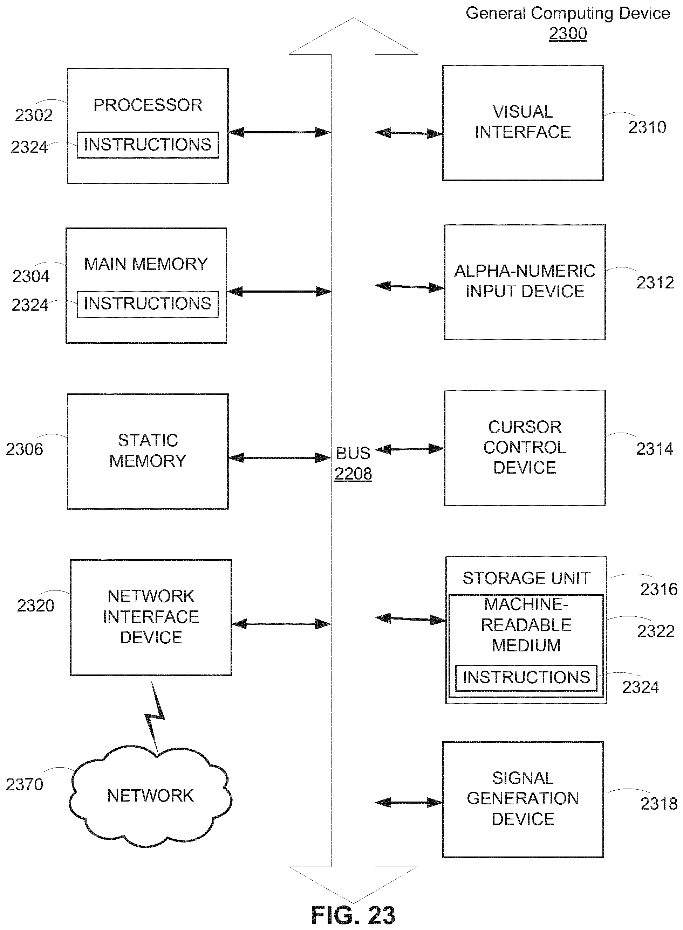

FIG. 23 is a block diagram illustrating components of an example machine able to read instructions from a machine-readable medium and execute them in a processor (or controller). Specifically, FIG. 23 shows a diagrammatic representation of a machine in the example form a computer system 2300, within which program code (e.g., software or software modules) for causing the machine to perform any one or more of the methodologies discussed herein may be executed. The program code may be comprised of instructions 2324 executable by one or more processors 2302. In alternative embodiments, the machine operates as a standalone device or may be connected (e.g., networked) to other machines. In a networked deployment, the machine may operate in the capacity of a server machine or a client machine in a server-client network environment, or as a peer machine in a peer-to-peer (or distributed) network environment.

The machine may be a server computer, a client computer, a personal computer (PC), a tablet PC, a set-top box (STB), a personal digital assistant (PDA), a cellular telephone, a smartphone, a web appliance, a network router, switch or bridge, or any machine capable of executing instructions 2324 (sequential or otherwise) that specify actions to be taken by that machine. Further, while only a single machine is illustrated, the term "machine" shall also be taken to include any collection of machines that individually or jointly execute instructions 2324 to perform any one or more of the methodologies discussed herein.

The example computer system 2300 includes a processor 2302 (e.g., a central processing unit (CPU), a graphics processing unit (GPU), a digital signal processor (DSP), one or more application specific integrated circuits (ASICs), one or more radio-frequency integrated circuits (RFICs), or any combination of these), a main memory 2304, and a static memory 2306, which are configured to communicate with each other via a bus 2308. The computer system 2300 may further include visual display interface 2310. The visual interface may include a software driver that enables displaying user interfaces on a screen (or display). The visual interface may display user interfaces directly (e.g., on the screen) or indirectly on a surface, window, or the like (e.g., via a visual projection unit). For ease of discussion the visual interface may be described as a screen. The visual interface 2310 may include or may interface with a touch enabled screen. The computer system 2300 may also include alphanumeric input device 2312 (e.g., a keyboard or touch screen keyboard), a cursor control device 2314 (e.g., a mouse, a trackball, a joystick, a motion sensor, or other pointing instrument), a storage unit 2316, a signal generation device 2318 (e.g., a speaker), and a network interface device 2320, which also are configured to communicate via the bus 2308.

The storage unit 2316 includes a machine-readable medium 2322 on which is stored instructions 2324 (e.g., software) embodying any one or more of the methodologies or functions described herein. The instructions 2324 (e.g., software) may also reside, completely or at least partially, within the main memory 2304 or within the processor 2302 (e.g., within a processor's cache memory) during execution thereof by the computer system 2300, the main memory 2304 and the processor 2302 also constituting machine-readable media. The instructions 2324 (e.g., software) may be transmitted or received over a network 190 via the network interface device 2320.

While machine-readable medium 2322 is shown in an example embodiment to be a single medium, the term "machine-readable medium" should be taken to include a single medium or multiple media (e.g., a centralized or distributed database, or associated caches and servers) able to store instructions (e.g., instructions 2324). The term "machine-readable medium" shall also be taken to include any medium that is capable of storing instructions (e.g., instructions 2324) for execution by the machine and that cause the machine to perform any one or more of the methodologies disclosed herein. The term "machine-readable medium" includes, but not be limited to, data repositories in the form of solid-state memories, optical media, and magnetic media.

### XIII. EXAMPLE EMBODIMENTS

Clause 1. An autonomous mowing vehicle comprising: a camera system comprising a plurality of cameras positioned around the autonomous mowing vehicle; a mowing deck comprising one or more motorized blades for mowing plants in an environment; and a control system configured to: capture image data from a camera system of an autonomous mowing vehicle; detect an object in an environment surrounding the autonomous mowing vehicle based on the image data; generate a virtual buffer for the object, the virtual buffer positioned around the object; generate a plurality of virtual safety bubbles around the autonomous mowing vehicle based on a configuration of the autonomous mowing vehicle; and perform, via at least the mowing deck, autonomous operation of the mowing vehicle to perform one or more landscaping actions in the environment while evading breach of the plurality of virtual safety bubbles by the virtual buffer of the object.

Clause 2. The autonomous mowing vehicle of clause 1, the control system further configured to: generate a spatial representation of the autonomous mowing vehicle based on the image data, wherein the spatial representation spatially describes the object in relation to the autonomous mowing vehicle.

Clause 3. The autonomous mowing vehicle of clause 2, the control system further configured to: applying one or more machine-learning models to classify an object type of a plurality of object types for the object based on the image data, wherein the virtual buffer for the object is based on the object type classified by the one or more machine-learning models.

Clause 4. The autonomous mowing vehicle of clause 3, wherein the plurality of object types includes persons and inanimate objects, wherein responsive to classifying the object as a person, generating the virtual buffer for the object having a first size, and wherein responsive to classifying the object as an inanimate object, generating the virtual buffer for the object having a second size smaller than the first size.

Clause 5. The autonomous mowing vehicle of any one of clauses 1-4, wherein the control system being configured to generate the plurality of virtual safety bubbles based on the configuration of the autonomous mowing vehicle comprises being configured to: generate an outer virtual safety bubble; and responsive to breach of the outer virtual safety bubble, trigger one or more warnings to distance the object from the autonomous mowing vehicle.

Clause 6. The autonomous mowing vehicle of clause 5, wherein the control system being configured to trigger one or more warnings comprises being configured to: the outer virtual safety bubble is configured to trigger, as the one or more warnings, an audio cue by a speaker or a visual cue by a light system.

Clause 7. The autonomous mowing vehicle of any one of clauses 5-6, wherein the control system being configured to generate the plurality of virtual safety bubbles based on the configuration of the autonomous mowing vehicle comprises being further configured to: responsive to breach of the outer virtual safety bubble, initiate a timer; and responsive to expiration of the timer, terminate autonomous operation of the autonomous mowing vehicle.

Clause 8. The autonomous mowing vehicle of any one of clauses 1-7, wherein the control system being configured to generate the plurality of virtual safety bubbles based on the configuration of the autonomous mowing vehicle comprises being configured to: generate an inner virtual safety bubble during actuation of the mowing deck of the autonomous mowing vehicle; and responsive to breach of the inner virtual safety bubble, terminate actuation of the mowing deck.

Clause 9. The autonomous mowing vehicle of any one of clauses 1-8, wherein the control system being configured to perform autonomous operation of the mowing vehicle comprises being configured to: detect a potential breach by the virtual buffer of the plurality of virtual safety bubbles based on a trajectory of the autonomous mowing vehicle; responsive to detecting the potential breach, modify the configuration of the autonomous mowing vehicle to evade the breach of the plurality of virtual safety bubbles; and modify the plurality of virtual safety bubbles around the autonomous mowing vehicle based on the modified configuration of the autonomous mowing vehicle.

Clause 10. A non-transitory computer-readable storage medium storing instructions that, when executed by a computer processor, cause the computer processor to perform operations comprising: capturing image data from a camera system of an autonomous mowing vehicle; detecting at least one object in an environment surrounding the autonomous mowing vehicle based on the image data; generating a virtual buffer for the object, the virtual buffer positioned around the object; generating a plurality of virtual safety bubbles around the autonomous mowing vehicle based on a configuration of the autonomous mowing vehicle; and performing autonomous operation of the mowing vehicle to perform one or more landscaping actions in the environment while evading breach of the plurality of virtual safety bubbles by the virtual buffer of the object.

Clause 11. The non-transitory computer-readable storage medium of clause 10, wherein capturing the image data comprises capturing images from stereoscopic pairs of cameras positioned around the autonomous mowing vehicle to capture a 360-degree panoramic view of the environment surrounding the autonomous mowing vehicle.

Clause 12. The non-transitory computer-readable storage medium of any one of clauses 10-11, the operations further comprising: generating a spatial representation of the autonomous mowing vehicle based on the image data, wherein the spatial representation spatially describes the object in relation to the autonomous mowing vehicle.

Clause 13. The non-transitory computer-readable storage medium of clause 12, the operations further comprising: applying one or more machine-learning models to classify an object type of a plurality of object types for the object based on the image data, wherein the virtual buffer for the object is based on the object type classified by the one or more machine-learning models.

Clause 14. The non-transitory computer-readable storage medium of clause 13, wherein the plurality of object types includes persons and inanimate objects, wherein responsive to classifying the object as a person, generating the virtual buffer for the object having a first size, and wherein responsive to classifying the object as an inanimate object, generating the virtual buffer for the object having a second size smaller than the first size.

Clause 15. The non-transitory computer-readable storage medium of any one of clauses 10-14, wherein generating the plurality of virtual safety bubbles based on the configuration of the autonomous mowing vehicle comprises: generating an outer virtual safety bubble, wherein breach of the outer virtual safety bubble triggers one or more warnings to distance from the autonomous mowing vehicle.

Clause 16. The non-transitory computer-readable storage medium of clause 15, wherein the outer virtual safety bubble is configured to trigger, as the one or more warnings, an audio cue by a speaker or a visual cue by a light system.

Clause 17. The non-transitory computer-readable storage medium of any one of clauses 15-16, wherein the outer virtual safety bubble is configured to, responsive to the expiration of a timer, terminate autonomous operation of the autonomous mowing vehicle.

Clause 18. The non-transitory computer-readable storage medium of any one of clauses 10-17, wherein generating the plurality of virtual safety bubbles based on the configuration of the autonomous mowing vehicle comprises: generating an inner virtual safety bubble during actuation of a landscaping mechanism of the autonomous mowing vehicle, wherein breach of the inner virtual safety bubble triggers termination of actuation of the landscaping mechanism.

Clause 19. The non-transitory computer-readable storage medium of any one of clauses 10-18, wherein performing autonomous operation of the mowing vehicle comprises: detecting a potential breach by the virtual buffer of the plurality of virtual safety bubbles based on a trajectory of the autonomous mowing vehicle; responsive to detecting the potential breach, modifying the configuration of the autonomous mowing vehicle to evade the breach of the plurality of virtual safety bubbles; and modifying the plurality of virtual safety bubbles around the autonomous mowing vehicle based on the modified configuration of the autonomous mowing vehicle.

Clause 20. A computer-implemented method comprising: capturing image data from a camera system of an autonomous mowing vehicle; detecting at least one object in an environment surrounding the autonomous mowing vehicle based on the image data; generating a virtual buffer for the object, the virtual buffer positioned around the object; generating a plurality of virtual safety bubbles around the autonomous mowing vehicle based on a configuration of the autonomous mowing vehicle; and performing autonomous operation of the mowing vehicle to perform one or more landscaping actions in the environment while evading breach of the plurality of virtual safety bubbles by the virtual buffer of the object.

Clause 21. The computer-implemented method of clause 20, wherein capturing the image data comprises capturing images from stereoscopic pairs of cameras positioned around the autonomous mowing vehicle to capture a 360-degree panoramic view of the environment surrounding the autonomous mowing vehicle.

Clause 22. The computer-implemented method of any one of clauses 20-21, further comprising: generating a spatial representation of the autonomous mowing vehicle based on the image data, wherein the spatial representation spatially describes the object in relation to the autonomous mowing vehicle.

Clause 23. The computer-implemented method of clause 22, further comprising: applying one or more machine-learning models to classify an object type of a plurality of object types for the object based on the image data, wherein the virtual buffer for the object is based on the object type classified by the one or more machine-learning models.

Clause 24. The computer-implemented method of clause 23, wherein the plurality of object types includes persons and inanimate objects, wherein responsive to classifying the object as a person, generating the virtual buffer for the object having a first size, and wherein responsive to classifying the object as an inanimate object, generating the virtual buffer for the object having a second size smaller than the first size.

Clause 25. The computer-implemented method of any one of clauses 20-24, wherein generating the plurality of virtual safety bubbles based on the configuration of the autonomous mowing vehicle comprises: generating an outer virtual safety bubble, wherein breach of the outer virtual safety bubble triggers one or more warnings to distance from the autonomous mowing vehicle.

Clause 26. The computer-implemented method of clause 25, wherein the outer virtual safety bubble is configured to trigger, as the one or more warnings, an audio cue by a speaker or a visual cue by a light system.

Clause 27. The computer-implemented method of any one of clauses 25-26, wherein the outer virtual safety bubble is configured to, responsive to the expiration of a timer, terminate autonomous operation of the autonomous mowing vehicle.

Clause 28. The computer-implemented method of any one of clauses 20-27, wherein generating the plurality of virtual safety bubbles based on the configuration of the autonomous mowing vehicle comprises: generating an inner virtual safety bubble during actuation of a landscaping mechanism of the autonomous mowing vehicle, wherein breach of the inner virtual safety bubble triggers termination of actuation of the landscaping mechanism.

Clause 29. The computer-implemented method of any one of clauses 20-28, wherein performing autonomous operation of the mowing vehicle comprises: detecting a potential breach by the virtual buffer of the plurality of virtual safety bubbles based on a trajectory of the autonomous mowing vehicle; responsive to detecting the potential breach, modifying the configuration of the autonomous mowing vehicle to evade the breach of the plurality of virtual safety bubbles; and modifying the plurality of virtual safety bubbles around the autonomous mowing vehicle based on the modified configuration of the autonomous mowing vehicle.

### XIV. ADDITIONAL CONSIDERATIONS

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of components, modules, or mechanisms. Modules may constitute either software modules (e.g., code embodied on a machine-readable medium or in a transmission signal) or hardware modules. A hardware module is tangible unit capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

**In** various embodiments, a hardware module may be implemented mechanically or electronically. For example, a hardware module may comprise dedicated circuitry or logic that is permanently configured (e.g., as a special-purpose processor, such as a landscaping environment programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple of such hardware modules exist contemporaneously, communications may be achieved through signal transmission (e.g., over appropriate circuits and buses) that connect the hardware modules. **In** embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or processors or processor-implemented hardware modules. The performance of certain of the operations may be distributed among the one or more processors, not only residing within a single machine, but deployed across one or more machines, e.g., computer system 700. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., application program interfaces (APIs).)

The performance of certain of the operations may be distributed among the one or more processors, not only residing within a single machine, but deployed across a number of machines. It should be noted that where an operation is described as performed by "a processor," this should be construed to also include the process being performed by more than one processor. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Some portions of this specification are presented in terms of algorithms or symbolic representations of operations on data stored as bits or binary digital signals within a machine memory (e.g., a computer memory). These algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. It should be understood that these terms are not intended as synonyms for each other. For example, some embodiments may be described using the term "connected" to indicate that two or more elements are in direct physical or electrical contact with each other. In another example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the invention. This description should be read to include one or at least one and the singular also includes the plural unless it is obvious that it is meant otherwise.

Upon reading this disclosure, those of skill in the art will appreciate still additional alternative structural and functional designs for a system and a process for providing CMC change assessment through the disclosed principles herein. Thus, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein without departing from the disclosed principles.
Embodiments of the invention can be described with reference to the following numbered clauses, with preferred features laid out in dependent clauses:
1. An autonomous mowing vehicle comprising:
   a camera system comprising a plurality of cameras positioned around the autonomous mowing vehicle;
   a mowing deck comprising one or more motorized blades for mowing plants in an environment; and
   a control system configured to:
      capture image data from a camera system of an autonomous mowing vehicle;
      detect an object in an environment surrounding the autonomous mowing vehicle based on the image data;
      generate a virtual buffer for the object, the virtual buffer positioned around the object;
      generate a plurality of virtual safety bubbles around the autonomous mowing vehicle based on a configuration of the autonomous mowing vehicle; and
      perform, via at least the mowing deck, autonomous operation of the mowing vehicle to perform one or more landscaping actions in the environment while evading breach of the plurality of virtual safety bubbles by the virtual buffer of the object.
2. The autonomous mowing vehicle of clause 1, the control system further configured to:
   generate a spatial representation of the autonomous mowing vehicle based on the image data, wherein the spatial representation spatially describes the object in relation to the autonomous mowing vehicle.
3. The autonomous mowing vehicle of clause 2, the control system further configured to:
   applying one or more machine-learning models to classify an object type of a plurality of object types for the object based on the image data, wherein the virtual buffer for the object is based on the object type classified by the one or more machine-learning models.
4. The autonomous mowing vehicle of clause 3, wherein the plurality of object types includes persons and inanimate objects,
   wherein responsive to classifying the object as a person, generating the virtual buffer for the object having a first size, and
   wherein responsive to classifying the object as an inanimate object, generating the virtual buffer for the object having a second size smaller than the first size.
5. The autonomous mowing vehicle of any one of clauses 1-4, wherein the control system being configured to generate the plurality of virtual safety bubbles based on the configuration of the autonomous mowing vehicle comprises being configured to:
   generate an outer virtual safety bubble; and
   responsive to breach of the outer virtual safety bubble, trigger one or more warnings to distance the object from the autonomous mowing vehicle.
6. The autonomous mowing vehicle of clause 5, wherein the control system being configured to trigger one or more warnings comprises being configured to:
   the outer virtual safety bubble is configured to trigger, as the one or more warnings, an audio cue by a speaker or a visual cue by a light system.
7. The autonomous mowing vehicle of any one of clauses 5-6, wherein the control system being configured to generate the plurality of virtual safety bubbles based on the configuration of the autonomous mowing vehicle comprises being further configured to:
   responsive to breach of the outer virtual safety bubble, initiate a timer; and
   responsive to expiration of the timer, terminate autonomous operation of the autonomous mowing vehicle.
8. The autonomous mowing vehicle of any one of clauses 1-7, wherein the control system being configured to generate the plurality of virtual safety bubbles based on the configuration of the autonomous mowing vehicle comprises being configured to:
   generate an inner virtual safety bubble during actuation of the mowing deck of the autonomous mowing vehicle; and
   responsive to breach of the inner virtual safety bubble, terminate actuation of the mowing deck.
9. The autonomous mowing vehicle of any one of clauses 1-8, wherein the control system being configured to perform autonomous operation of the mowing vehicle comprises being configured to:
   detect a potential breach by the virtual buffer of the plurality of virtual safety bubbles based on a trajectory of the autonomous mowing vehicle;
   responsive to detecting the potential breach, modify the configuration of the autonomous mowing vehicle to evade the breach of the plurality of virtual safety bubbles; and
   modify the plurality of virtual safety bubbles around the autonomous mowing vehicle based on the modified configuration of the autonomous mowing vehicle.
10. A non-transitory computer-readable storage medium storing instructions that, when executed by a computer processor, cause the computer processor to perform operations comprising:
   capturing image data from a camera system of an autonomous mowing vehicle;
   detecting at least one object in an environment surrounding the autonomous mowing vehicle based on the image data;
   generating a virtual buffer for the object, the virtual buffer positioned around the object;
   generating a plurality of virtual safety bubbles around the autonomous mowing vehicle based on a configuration of the autonomous mowing vehicle; and
   performing autonomous operation of the mowing vehicle to perform one or more landscaping actions in the environment while evading breach of the plurality of virtual safety bubbles by the virtual buffer of the object.
11. The non-transitory computer-readable storage medium of clause 10, wherein capturing the image data comprises capturing images from stereoscopic pairs of cameras positioned around the autonomous mowing vehicle to capture a 360-degree panoramic view of the environment surrounding the autonomous mowing vehicle.
12. The non-transitory computer-readable storage medium of clause 10 or clause 11, configured to provide the autonomous mowing vehicle of any of clauses 2 to 9.
13. A computer-implemented method comprising:
   capturing image data from a camera system of an autonomous mowing vehicle;
   detecting at least one object in an environment surrounding the autonomous mowing vehicle based on the image data;
   generating a virtual buffer for the object, the virtual buffer positioned around the object;
   generating a plurality of virtual safety bubbles around the autonomous mowing vehicle based on a configuration of the autonomous mowing vehicle; and
   performing autonomous operation of the mowing vehicle to perform one or more landscaping actions in the environment while evading breach of the plurality of virtual safety bubbles by the virtual buffer of the object.
14. The computer-implemented method of clause 20, wherein capturing the image data comprises capturing images from stereoscopic pairs of cameras positioned around the autonomous mowing vehicle to capture a 360-degree panoramic view of the environment surrounding the autonomous mowing vehicle.
15. The computer-implemented method of clause 13 or clause 14, further comprising providing the autonomous mowing vehicle of any of clauses 2 to 9.

## Claims

1. An autonomous mowing vehicle comprising:
a camera system comprising a plurality of cameras positioned around the autonomous mowing vehicle;
a mowing deck comprising one or more motorized blades for mowing plants in an environment; and
a control system configured to:
capture image data from the camera system of an autonomous mowing vehicle;
detect an object in an environment surrounding the autonomous mowing vehicle based on the image data;
generate a virtual buffer for the object, the virtual buffer positioned around the object;
generate a plurality of virtual safety bubbles around the autonomous mowing vehicle based on a configuration of the autonomous mowing vehicle, wherein the generation of the plurality of virtual safety bubbles comprises generating an inner virtual safety bubble during actuation of the mowing deck of the autonomous mowing vehicle; and
perform, via at least the mowing deck, autonomous operation of the mowing vehicle to perform one or more landscaping actions in the environment while evading breach of the plurality of virtual safety bubbles by the virtual buffer of the object,
wherein, responsive to breach of the inner virtual safety bubble, terminate actuation of the mowing deck.

2. The autonomous mowing vehicle of claim 1, wherein the control system is further configured to:
generate a spatial representation of the autonomous mowing vehicle based on the image data, wherein the spatial representation spatially describes the object in relation to the autonomous mowing vehicle.

3. The autonomous mowing vehicle of claim 2, wherein the control system is further configured to:
apply one or more machine-learning models to classify an object type of a plurality of object types for the object based on the image data, wherein the virtual buffer for the object is based on the object type classified by the one or more machine-learning models.

4. The autonomous mowing vehicle of claim 3, wherein the plurality of object types includes persons and inanimate objects,
wherein responsive to classifying the object as a person, generating the virtual buffer for the object having a first size, and
wherein responsive to classifying the object as an inanimate object, generating the virtual buffer for the object having a second size smaller than the first size.

5. The autonomous mowing vehicle of any one of claims 1-4, wherein the control system being configured to generate the plurality of virtual safety bubbles based on the configuration of the autonomous mowing vehicle comprises being configured to:
generate an outer virtual safety bubble; and
responsive to breach of the outer virtual safety bubble, trigger one or more warnings to distance the object from the autonomous mowing vehicle.

6. The autonomous mowing vehicle of claim 5, wherein the control system being configured to trigger one or more warnings comprises being configured to:
the outer virtual safety bubble is configured to trigger, as the one or more warnings, an audio cue by a speaker or a visual cue by a light system.

7. The autonomous mowing vehicle of any one of claims 5-6, wherein the control system being configured to generate the plurality of virtual safety bubbles based on the configuration of the autonomous mowing vehicle comprises being further configured to:
responsive to breach of the outer virtual safety bubble, initiate a timer; and
responsive to expiration of the timer, terminate autonomous operation of the autonomous mowing vehicle.

8. The autonomous mowing vehicle of any one of claims 1-7, wherein the control system being configured to perform autonomous operation of the mowing vehicle comprises being configured to:
detect a potential breach by the virtual buffer of the plurality of virtual safety bubbles based on a trajectory of the autonomous mowing vehicle;
responsive to detecting the potential breach, modify the configuration of the autonomous mowing vehicle to evade the breach of the plurality of virtual safety bubbles; and
modify the plurality of virtual safety bubbles around the autonomous mowing vehicle based on the modified configuration of the autonomous mowing vehicle.

9. A non-transitory computer-readable storage medium storing instructions that, when executed by a computer processor, cause the computer processor to perform operations comprising:
capturing image data from a camera system of an autonomous mowing vehicle;
detecting at least one object in an environment surrounding the autonomous mowing vehicle based on the image data;
generating a virtual buffer for the object, the virtual buffer positioned around the object;
generating a plurality of virtual safety bubbles around the autonomous mowing vehicle based on a configuration of the autonomous mowing vehicle, wherein the generation of the plurality of virtual safety bubbles comprises generating an inner virtual safety bubble during actuation of the mowing deck of the autonomous mowing vehicle; and
performing autonomous operation of the mowing vehicle to perform one or more landscaping actions in the environment while evading breach of the plurality of virtual safety bubbles by the virtual buffer of the object,
wherein, responsive to breach of the inner virtual safety bubble, terminate actuation of the mowing deck.

10. The non-transitory computer-readable storage medium of claim 9, wherein capturing the image data comprises capturing images from stereoscopic pairs of cameras positioned around the autonomous mowing vehicle to capture a 360-degree panoramic view of the environment surrounding the autonomous mowing vehicle.

11. The non-transitory computer-readable storage medium of claim 9 or claim 10, configured to provide the autonomous mowing vehicle of any of claims 2 to 8.

12. A computer-implemented method comprising:
capturing image data from a camera system of an autonomous mowing vehicle;
detecting at least one object in an environment surrounding the autonomous mowing vehicle based on the image data;
generating a virtual buffer for the object, the virtual buffer positioned around the object;
generating a plurality of virtual safety bubbles around the autonomous mowing vehicle based on a configuration of the autonomous mowing vehicle, wherein the generation of the plurality of virtual safety bubbles comprises generating an inner virtual safety bubble during actuation of the mowing deck of the autonomous mowing vehicle; and
performing autonomous operation of the mowing vehicle to perform one or more landscaping actions in the environment while evading breach of the plurality of virtual safety bubbles by the virtual buffer of the object,
wherein, responsive to breach of the inner virtual safety bubble, terminate actuation of the mowing deck.

13. The computer-implemented method of claim 12, wherein capturing the image data comprises capturing images from stereoscopic pairs of cameras positioned around the autonomous mowing vehicle to capture a 360-degree panoramic view of the environment surrounding the autonomous mowing vehicle.

14. The computer-implemented method of claim 12 or claim 13, further comprising providing the autonomous mowing vehicle of any of claims 2 to 8.
